# EUROPEAN PATENT APPLICATION

(11) **EP 4 737 772 A1**
(43) Date of publication of application: **06.05.2026**
(21) Application number: 25842106.4
(22) Date of filing: 19.08.2025
(51) Int. Cl.: F16K 3/08

(54) **FLUID CONTROL VALVE CAPABLE OF BEING USED FOR IRRIGATION**

(30) Priority: 19.08.2024 CN 202422009978 U; 14.08.2025 CN 202521726574 U
(71) Applicant: Wenzhou Runxin Manufacturing Machine Co., Ltd., Wenzhou, Zhejiang 325019 (CN)
(72) Inventor: WU, Xiaorong, Wenzhou, Zhejiang 325019 (CN); YUAN, Hailin, Wenzhou, Zhejiang 325019 (CN); WU, Xianshui, Wenzhou, Zhejiang 325019 (CN); WU, Zhaoyu, Wenzhou, Zhejiang 325019 (CN); WANG, Zhenkun, Wenzhou, Zhejiang 325019 (CN); LI, Shuangquan, Wenzhou, Zhejiang 325019 (CN); NI, Xielang, Wenzhou, Zhejiang 325019 (CN)
(74) Representative: Chung, Hoi Kan
(86) International application number: PCT/CN2025/115726
(87) International publication number: WO 2026/041027

(57) **Abstract**

Disclosed is a fluid control valve usable for irrigation. The fluid control valve includes: a valve body having at least one input port, at least one output port and a valve seat body which is provided therein with a straight flow channel, wherein the input port and the output port are respectively arranged at two ends of the straight flow channel and communicate with each other by means of the straight flow channel; and a valve core assembly located in the straight flow channel of the valve seat body and configured to control the straight flow channel to connect the input port and the output port or close the input port and the output port. The fluid control valve usable for irrigation can effectively reduce water resistance by means of the straight flow channel.

## Description

### TECHNICAL FIELD

The present disclosure relates to a valve and, in more particular, to a fluid control valve usable for irrigation.

### BACKGROUND

In the technical field of agricultural irrigation, a single valve is usually used to control opening and closing of one flow channel, which requires a high-cost pipeline system accompanied by the defect of inconvenient operation. For irrigation over a large area of farmland, in some cases, two or four branch pipes are led out from an irrigation output stub, and each branch pipe is provided with a valve for control. In some cases, a three-way or five-way valve is used to control each branch pipe. During irrigation, water intake pipes are generally located underground, while the water spray nozzles are located above ground. For this reason, most of the existing multi-way valves such as three-way valves, four-way valves, and five-way valves have a structure of a single input port and multiple output ports. A valve core assembly is arranged between the single input port and multiple output ports, and paths are switched by connecting the single input port to one of the multiple output ports. The existing valve core assembly design mainly uses a valve core assembly to switch a water channel by changing the direction of a water channel. When water passes through the channel of the valve core assembly, the change in the water channel direction causes the problem of large water resistance.

### SUMMARY

In view of the shortcomings in the prior art, an objective of the present disclosure is to provide a fluid control valve usable for irrigation, which causes a small water resistance.

To achieve the above objective, the present disclosure provides the following technical solutions: A fluid control valve usable for irrigation includes:
a valve body having at least one input port, at least one output port and a valve seat body which is provided therein with a straight flow channel, where the input port and the output port are respectively arranged at two ends of the straight flow channel and communicate with each other by means of the straight flow channel; and
a valve core assembly arranged in the valve seat body and located in the straight flow channel to control the straight flow channel to connect the input port and the output port or close the input port and the output port.

As a further improvement of the present disclosure, the valve core assembly includes:
a fixed valve plate fixedly mounted in the valve seat body, located in the straight flow channel, and at least provided with a through hole; and
a movable valve plate rotatably arranged on the fixed valve plate and at least provided with a flow guide hole, the movable valve plate rotating in a manner of fitting closely against the fixed valve plate to control the straight flow channel to connect the input port and the output port when the flow guide hole aligns with the through hole in the fixed valve plate, or to disconnect the input port from the output port when the flow guide hole does not the through hole in the fixed valve plate.

As a further improvement of the present disclosure, the movable valve plate is located at an end, facing the input port, of the fixed valve plate.

As a further improvement of the present disclosure, the fixed valve plate is further provided with a blind hole, and closing of the straight flow channel is controlled by alignment of the blind hole with the flow guide hole.

As a further improvement of the present disclosure, the blind hole is formed by a blind hole structure directly formed on the fixed valve plate, or is a combination of a through hole formed in the fixed valve plate and a closed cavity formed in the valve seat body.

As a further improvement of the present disclosure, the output port is arranged at an upper end of the valve seat body, the input port is arranged at a lower end of the valve seat body, and a lower end of a control valve stem penetrates into the valve seat body from top to bottom, and extends through the fixed valve plate to be connected to the movable valve plate.

As a further improvement of the present disclosure, the input port includes a first input port, the output port includes a first output port, the fixed valve plate is provided with a first through hole and a second blind hole, the first through hole communicates with the first output port, the movable valve plate is provided with a first flow guide hole which communicates with the first input port, and the fixed valve plate and the movable valve plate have the following cooperation relationship: the first flow guide hole aligns with the first through hole and then communicates with the first through hole; or, the first flow guide hole aligns with the second blind hole and then is closed by the second blind hole; or, the first flow guide hole partially aligns with the first through hole and then communicates with the first through hole.

As a further improvement of the present disclosure, the second blind hole is formed by a blind hole structure directly formed on the fixed valve plate, or is a combination of a through hole formed in the fixed valve plate and a closed cavity formed in the valve seat body.

As a further improvement of the present disclosure, the input port includes a first input port, the output ports include a first output port and a second output port, the fixed valve plate is provided with a first through hole, a second through hole and a third blind hole, the first through hole and the second through hole respectively communicate with the first output port and the second output port, the movable valve plate is provided with a first flow guide hole which communicates with the first input port, and the fixed valve plate and the movable valve plate have the following cooperation relationship: the first flow guide hole aligns with the first through hole and then communicates with the first through hole; or, the first flow guide hole partially aligns with the first through hole and the third blind hole and then communicates with the first through hole; or, the first flow guide hole aligns with the second through hole and then communicates with the second through hole; or, the first flow guide hole partially aligns with the second through hole and the third blind hole and then communicates with the second through hole; or, the first flow guide hole aligns with the third blind hole and then is closed by the third blind hole.

As a further improvement of the present disclosure, the third blind hole is formed by a blind hole structure directly formed on the fixed valve plate, or is a combination of a through hole formed in the fixed valve plate and a closed cavity formed in the valve seat body.

As a further improvement of the present disclosure, the input port includes a first input port, the output ports include a first output port and a second output port, the fixed valve plate is provided with a first through hole, a second through hole and a third blind hole, the first through hole and the second through hole respectively communicate with the first output port and the second output port, the movable valve plate is provided with a first flow guide hole and a second flow guide hole which communicate with the first input port, and the fixed valve plate and the movable valve plate have the following cooperation relationship: the first flow guide hole aligns with the first through hole and then communicates with the first through hole, and the second flow guide hole aligns with the second through hole and then communicates with the second through hole; or, the first flow guide hole aligns with the second through hole and then communicates with the second through hole, and the second flow guide hole aligns with the third blind hole and then is closed by the third blind hole; or, the first flow guide hole aligns with the third blind hole and then is closed by the third blind hole, and the second flow guide hole aligns with the first through hole and then communicates with the first through hole.

As a further improvement of the present disclosure, the third blind hole is formed by a blind hole structure directly formed on the fixed valve plate, or is a combination of a through hole formed in the fixed valve plate and a closed cavity formed in the valve seat body.

As a further improvement of the present disclosure, the input port includes a first input port, the output ports include a first output port, a second output port and a third output port, the fixed valve plate is provided with a first through hole, a second through hole and a third through hole which respectively communicate with the first output port, the second output port and the third output port, the movable valve plate is provided with a first flow guide hole which communicates with the first input port, and the fixed valve plate and the movable valve plate have the following cooperation relationship: the first flow guide hole aligns with the first through hole and then communicates with the first through hole; or, the first flow guide hole aligns with the second through hole and then communicates with the second through hole; or, the first flow guide hole aligns with the third through hole and then communicates with the third through hole.

As a further improvement of the present disclosure, the input port includes a first input port, the output port includes a first output port, the fixed valve plate is provided with a first through hole, a second through hole, a third blind hole and a fourth blind hole, the first through hole and the second through hole communicate with the first output port, the movable valve plate is provided with a first flow guide hole and a second flow guide hole which communicate with the first input port, and the fixed valve plate and the movable valve plate have the following cooperation relationship: the first flow guide hole aligns with the first through hole and then communicates with the first through hole, and the second flow guide hole aligns with the second through hole and then communicates with the second through hole; or, the first flow guide hole aligns with the third blind hole and then is closed by the third blind hole, and the second flow guide hole aligns with the fourth blind hole and then is closed by the fourth blind hole; or, the first flow guide hole partially aligns with the first through hole and the third blind hole and then communicates with the first through hole, and the second flow guide hole partially aligns with the second through hole and the fourth blind hole and then communicates with the second through hole.

As a further improvement of the present disclosure, the input port includes a first input port, the output ports include a first output port and a second output port, the fixed valve plate is provided with a first through hole, a second through hole, a third blind hole and a fourth blind hole, the first through hole and the second through hole respectively communicate with the first output port and the second output port, the movable valve plate is provided with a first flow guide hole which communicates with the first input port, and the fixed valve plate and the movable valve plate have the following cooperation relationship: the first flow guide hole aligns with the fourth blind hole and then is closed by the fourth blind hole; or, the first flow guide hole partially aligns with the first through hole and the fourth blind hole and then communicates with the first through hole; or, the first flow guide hole aligns with the first through hole and then communicates with the first through hole; or, the first flow guide hole aligns with the third blind hole and then is closed by the third blind hole; or, the first flow guide hole partially aligns with the second through hole and the third blind hole and then communicates with the second through hole; or, the first flow guide hole aligns with the second through hole and then communicates with the second through hole.

As a further improvement of the present disclosure, the third blind hole and the fourth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port and a second output port, the fixed valve plate is provided with a first through hole, a second through hole, a third blind hole and a fourth blind hole, the first through hole and the second through hole respectively communicate with the first output port and the second output port, the movable valve plate is provided with a first flow guide hole and a second flow guide hole which communicate with the first input port, and the fixed valve plate and the movable valve plate have the following cooperation relationship: the first flow guide hole aligns with the fourth blind hole and then is closed by the fourth blind hole, and the second flow guide hole aligns with the third blind hole and then is closed by the third blind hole; or, the first flow guide hole partially aligns with the first through hole and the fourth blind hole and then communicates with the first through hole, and the second flow guide hole partially aligns with the third blind hole and the second through hole and then communicates with the second through hole; or, the first flow guide hole aligns with the first through hole and then communicates with the first through hole, and the second flow guide hole aligns with the second through hole and then communicates with the second through hole.

As a further improvement of the present disclosure, the third blind hole and the fourth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port and a second output port, the fixed valve plate is provided with a first through hole, a second through hole, a third blind hole, a fourth blind hole and a fifth blind hole, the first through hole and the second through hole respectively communicate with the first output port and the second output port, the movable valve plate is provided with a first flow guide hole which communicates with the first input port, and the fixed valve plate and the movable valve plate have the following cooperation relationship: the first flow guide hole partially aligns with the first through hole and the fifth blind hole and then communicates with the first through hole; or, the first flow guide hole aligns with the first through hole and then communicates with the first through hole; or, the first flow guide hole aligns with the fifth blind hole and then is closed by the fifth blind hole; or, the first flow guide hole partially aligns with the second through hole and the fifth blind hole and then communicates with the second through hole; or, the first flow guide hole aligns with the second through hole and then communicates with the second through hole.

As a further improvement of the present disclosure, the third blind hole, the fourth blind hole and the fifth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port and a third output port, the fixed valve plate is provided with a first through hole, a second through hole, a third through hole, a fourth blind hole and a fifth blind hole, the first through hole, the second through hole and the third through hole respectively communicate with the first output port, the second output port and the third output port, the movable valve plate is provided with a first flow guide hole which communicates with the first input port, and the fixed valve plate and the movable valve plate have the following cooperation relationship: the first flow guide hole aligns with the fourth blind hole and then is closed by the fourth blind hole; or, the first flow guide hole partially aligns with the first through hole and the fourth blind hole and then communicates with the first through hole; or, the first flow guide hole aligns with the first through hole and then communicates with the first through hole; or, the first flow guide hole aligns with the second through hole and then communicates with the second through hole; or, the first flow guide hole partially aligns with the second through hole and the fifth blind hole and then communicates with the second through hole; or, the first flow guide hole aligns with the third through hole and then communicates with the third through hole; or, the first flow guide hole partially aligns with the fifth blind hole and the third through hole and then communicates with the third through hole; or, the first flow guide hole aligns with the fifth blind hole and then is closed by the fifth blind hole.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole and a fifth blind hole, the first through hole, the second through hole, the third through hole and the fourth through hole respectively communicate with the first output port, the second output port, the third output port and the fourth output port, the movable valve plate is provided with a first flow guide hole which communicates with the first input port, and the fixed valve plate and the movable valve plate have the following cooperation relationship: the first flow guide hole aligns with the fifth blind hole and then is closed by the fifth blind hole; or, the first flow guide hole partially aligns with the first through hole and the fifth blind hole and then communicates with the first through hole; or, the first flow guide hole aligns with the first through hole and then communicates with the first through hole; or, the first flow guide hole aligns with the second through hole and then communicates with the second through hole; or, the first flow guide hole aligns with the third through hole and then communicates with the third through hole; or, the first flow guide hole aligns with the fourth through hole and then communicates with the fourth through hole; or, the first flow guide hole partially aligns with the fourth through hole and the fifth blind hole and then communicates with the fourth through hole.

As a further improvement of the present disclosure, the fifth blind hole is formed by a blind hole structure directly formed on the fixed valve plate, or is a combination of a through hole formed in the fixed valve plate and a closed cavity formed in the valve seat body.

As a further improvement of the present disclosure, the input port includes a first input port, the output ports include a first output port and a second output port, the fixed valve plate is provided with a first through hole, a second through hole, a third blind hole, a fourth blind hole, a fifth blind hole and a sixth blind hole, the first through hole and the second through hole respectively communicate with the first output port and the second output port, the movable valve plate is provided with a first flow guide hole and a second flow guide hole which communicate with the first input port, and the fixed valve plate and the movable valve plate have the following cooperation relationship: the first flow guide hole aligns with the fourth blind hole and is closed by the fourth blind hole, and the second flow guide hole aligns with the fifth blind hole and the sixth blind hole and is closed by the sixth blind hole; or, the first flow guide hole partially aligns with the fourth blind hole and the second through hole and then communicates with the second through hole, and the second flow guide hole aligns with the sixth blind hole and partially aligns with the first through hole and the fifth blind hole and then communicates with the first through hole; or, the first flow guide hole aligns with the second through hole and then communicates with the second through hole, and the second flow guide hole aligns with the first through hole and the sixth blind hole and then communicates with the first through hole; or, the first flow guide hole aligns with the fifth blind hole and then is closed by the fifth blind hole, and the second flow guide hole aligns with the first through hole and the third blind hole and then communicates with the first through hole; or, the first flow guide hole partially aligns with the fifth blind hole and the sixth blind hole and then is closed by the sixth blind hole, and the second flow guide hole partially aligns with the first through hole and the fourth blind hole and aligns with the third blind hole and then communicates with the first through hole; or, the first flow guide hole aligns with the third blind hole and then is closed by the third blind hole, and the second flow guide hole aligns with the second through hole and the fifth blind hole and then communicates with the second through hole; or, the first flow guide hole partially aligns with the third blind hole and the fourth blind hole and then is closed by the fourth blind hole, and the second flow guide hole partially aligns with the second through hole and the sixth blind hole and aligns with the fifth blind hole and then communicates with the second through hole.

As a further improvement of the present disclosure, the third blind hole, the fourth blind hole, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port and a third output port, the fixed valve plate is provided with a first through hole, a second through hole, a third through hole, a fourth blind hole, a fifth blind hole and a sixth blind hole, the first through hole, the second through hole and the third through hole respectively communicate with the first output port, the second output port and the third output port, the movable valve plate is provided with a first flow guide hole which communicates with the first input port, and the fixed valve plate and the movable valve plate have the following cooperation relationship: the first flow guide hole aligns with the sixth blind hole and then is closed by the sixth blind hole; or, the first flow guide hole partially aligns with the first through hole and the sixth blind hole and then communicates with the first through hole; or, the first flow guide hole aligns with the first through hole and then communicates with the first through hole; or, the first flow guide hole aligns with the fourth blind hole and then is closed by the fourth blind hole; or, the first flow guide hole partially aligns with the second through hole and the fourth blind hole and then communicates with the second through hole; or, the first flow guide hole aligns with the second through hole and then communicates with the second through hole; or, the first flow guide hole aligns with the fifth blind hole and then is closed by the fifth blind hole; or, the first flow guide hole partially aligns with the third through hole and the fifth blind hole and then communicates with the third through hole; or, the first flow guide hole aligns with the third through hole and then communicates with the third through hole.

As a further improvement of the present disclosure, the fourth blind hole, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port and a third output port, the fixed valve plate is provided with a first through hole, a second through hole, a third through hole, a fourth blind hole, a fifth blind hole and a sixth blind hole, the first through hole, the second through hole and the third through hole respectively communicate with the first output port, the second output port and the third output port, the movable valve plate is provided with a first flow guide hole and a second flow guide hole which communicate with the first input port, and the fixed valve plate and the movable valve plate have the following cooperation relationship: the first flow guide hole aligns with the sixth blind hole and then is closed by the sixth blind hole, and the second flow guide hole aligns with the fourth blind hole and then is closed by the fourth blind hole; or, the first flow guide hole partially aligns with the first through hole and the sixth blind hole and then communicates with the first through hole, and the second flow guide hole partially aligns with the fourth blind hole and the second through hole and then communicates with the second through hole; or, the first flow guide hole aligns with the first through hole and then communicates with the first through hole, and the second flow guide hole aligns with the second through hole and then communicates with the second through hole; or, the first flow guide hole aligns with the fourth blind hole and then is closed by the fourth blind hole, and the second flow guide hole aligns with the fifth blind hole and then is closed by the fifth blind hole; or, the first flow guide hole partially aligns with the second through hole and the fourth blind hole and then communicates with the second through hole, and the second flow guide hole partially aligns with the fifth blind hole and the third through hole and then communicates with the third through hole; or, the first flow guide hole aligns with the second through hole and then communicates with the second through hole, and the second flow guide hole aligns with the third through hole and then communicates with the third through hole; or, the first flow guide hole aligns with the fifth blind hole and then is closed by the fifth blind hole, and the second flow guide hole aligns with the sixth blind hole and then is closed by the sixth blind hole; or, the first flow guide hole partially aligns with the third through hole and the fifth blind hole and then communicates with the third through hole, and the second flow guide hole partially aligns with the sixth blind hole and the first through hole and then communicates with the first through hole; or, the first flow guide hole aligns with the third through hole and then communicates with the third through hole, and the second flow guide hole aligns with the first through hole and then communicates with the first through hole.

As a further improvement of the present disclosure, the fourth blind hole, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port and a third output port, the fixed valve plate is provided with a first through hole, a second through hole, a third through hole, a fourth blind hole, a fifth blind hole and a sixth blind hole, the first through hole, the second through hole and the third through hole respectively communicate with the first output port, the second output port and the third output port, the movable valve plate is provided with a first flow guide hole, a second flow guide hole and a third flow guide hole which communicate with the first input port, and the fixed valve plate and the movable valve plate have the following cooperation relationship: the first flow guide hole aligns with the sixth blind hole and then is closed by the sixth blind hole, the second flow guide hole aligns with the fourth blind hole and then is closed by the fourth blind hole, and the third flow guide hole aligns with the fifth blind hole and then is closed by the fifth blind hole; or, the first flow guide hole partially aligns with the first through hole and the sixth blind hole and then communicates with the first through hole, the second flow guide hole partially aligns with the fourth blind hole and the second through hole and then communicates with the second through hole, and the third flow guide hole partially aligns with the fifth blind hole and the third through hole and then communicates with the third through hole; or, the first flow guide hole aligns with the first through hole and then communicates with the first through hole, the second flow guide hole aligns with the second through hole and then communicates with the second through hole, and the third flow guide hole aligns with the third through hole and then communicates with the third through hole.

As a further improvement of the present disclosure, the fourth blind hole, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole and a sixth blind hole, the first through hole, the second through hole, the third through hole and the fourth through hole respectively communicate with the first output port, the second output port, the third output port and the fourth output port, the movable valve plate is provided with a first flow guide hole which communicates with the first input port, and the fixed valve plate and the movable valve plate have the following cooperation relationship: the first flow guide hole aligns with the sixth blind hole and then is closed by the sixth blind hole; or, the first flow guide hole partially aligns with the first through hole and the sixth blind hole and then communicates with the first through hole; or, the first flow guide hole aligns with the first through hole and then communicates with the first through hole; or, the first flow guide hole partially aligns with the sixth blind hole and the second through hole and then communicates with the second through hole; or, the first flow guide hole aligns with the second through hole and then communicates with the second through hole; or, the first flow guide hole aligns with the third through hole and then communicates the third through hole; or, the first flow guide hole partially aligns with the third through hole and the fifth blind hole and then communicates with the third through hole; the first flow guide hole aligns with the fifth blind hole and then is closed by the fifth blind hole; or, the first flow guide hole partially aligns with the fifth blind hole and the fourth through hole and then communicates with the fourth through hole; or, the first flow guide hole aligns with the fourth through hole and then communicates with the fourth through hole.

As a further improvement of the present disclosure, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole and a sixth blind hole, the first through hole, the second through hole, the third through hole and the fourth through hole respectively communicate with the first output port, the second output port, the third output port and the fourth output port, the movable valve plate is provided with a first flow guide hole and a second flow guide hole which are communicate with the first input port, and the fixed valve plate and the movable valve plate have the following cooperation relationship: the first flow guide hole aligns with the sixth blind hole and then is closed by the sixth blind hole, and the second flow guide hole aligns with the fifth blind hole and then is closed by the fifth blind hole; or, the first flow guide hole partially aligns with the first through hole and the sixth blind hole and then communicates with the first through hole, and the second flow guide hole partially aligns with the third through hole and the fifth blind hole and then communicates with the third through hole; or, the first flow guide hole aligns with the first through hole and then communicates with the first through hole, and the second flow guide hole aligns with the third through hole and then communicates with the third through hole; or, the first flow guide hole partially aligns with the sixth blind hole and the second through hole and then communicates with the second through hole, and the second flow guide hole partially aligns with the fifth blind hole and the fourth through hole and then communicates with the fourth through hole; or, the first flow guide hole aligns with the second through hole and then communicates with the second through hole, and the second flow guide hole aligns with the fourth through hole and then communicates with the fourth through hole.

As a further improvement of the present disclosure, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole and a sixth blind hole, the first through hole, the second through hole, the third through hole and the fourth through hole respectively communicate with the first output port, the second output port, the third output port and the fourth output port, the movable valve plate is provided with a first flow guide hole and a second flow guide hole which communicate with the first input port, and the fixed valve plate and the movable valve plate have the following cooperation relationship: the first flow guide hole aligns with the sixth blind hole and then is closed by the sixth blind hole, and the second flow guide hole aligns with the fifth blind hole and then is closed by the fifth blind hole; or, the first flow guide hole aligns with the second through hole and then communicates with the second through hole, and the second flow guide hole aligns with the first through hole and then communicates with the first through hole; or, the first flow guide hole aligns with the fourth through hole and then communicates with the fourth through hole, and the second flow guide hole aligns with the third through hole and then communicates with the third through hole.

As a further improvement of the present disclosure, the fifth blind hole and the sixth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole, a sixth blind hole, a seventh blind hole and an eighth blind hole, the first through hole, the second through hole, the third through hole and the fourth through hole respectively communicate with the first output port, the second output port, the third output port and the fourth output port, the movable valve plate is provided with a first flow guide hole which communicates with the first input port, and the fixed valve plate and the movable valve plate have the following cooperation relationship: the first flow guide hole aligns with the eighth blind hole and then is closed by the eighth blind hole; or, the first flow guide hole partially aligns with the eighth blind hole and the first through hole and then communicates with the first through hole; or, the first flow guide hole aligns with the first through hole and then communicates with the first through hole; or, the first flow guide hole aligns with the fifth blind hole and then is closed by the fifth blind hole; or, the first flow guide hole partially aligns with the fifth blind hole and the second through hole and then communicates with the second through hole; the first flow guide hole aligns with the second through hole and then communicates with the second through hole; or, the first flow guide hole aligns with the sixth blind hole and then is closed by the sixth blind hole; or, the first flow guide hole partially aligns with the sixth blind hole and the third through hole and then communicates with the third through hole; or, the first flow guide hole aligns with the third through hole and then communicates with the third through hole; or, the first flow guide hole aligns with the seventh blind hole and then is closed by the seventh blind hole; the first flow guide hole partially aligns with the seventh blind hole and the fourth through hole and then communicates with the fourth through hole; or the first flow guide hole aligns with the fourth through hole and then communicates with the fourth through hole.

As a further improvement of the present disclosure, the fifth blind hole, the sixth blind hole, the seventh blind hole and the eighth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole, a sixth blind hole, a seventh blind hole and an eighth blind hole, the first through hole, the second through hole, the third through hole and the fourth through hole respectively communicate with the first output port, the second output port, the third output port and the fourth output port, the movable valve plate is provided with a first flow guide hole and a second flow guide hole which communicate with the first input port, and the fixed valve plate and the movable valve plate have the following cooperation relationship: the first flow guide hole aligns with the eighth blind hole and then is closed by the eighth blind hole, and the second flow guide hole aligns with the sixth blind hole and then is closed by the sixth blind hole; or, the first flow guide hole partially aligns with the eighth blind hole and the first through hole and then communicates with the first through hole, and the second flow guide hole partially aligns with the sixth blind hole and the third through hole and then communicates with the third through hole; or, the first flow guide hole aligns with the first through hole and then communicates with the first through hole, and the second flow guide hole aligns with the third through hole and then communicates with the third through hole; or, the first flow guide hole aligns with the fifth blind hole and then is closed by the fifth blind hole, and the second flow guide hole aligns with the seventh blind hole and then is closed by the seventh blind hole; or, the first flow guide hole partially aligns with the fifth blind hole and the second through hole and then communicates with the second through hole, and the second flow guide hole partially aligns with the seventh blind hole and the fourth through hole and then communicates with the fourth through hole; or, the first flow guide hole aligns with the second through hole and then communicates with the second through hole, and the second flow guide hole aligns with the fourth through hole and then communicates with the fourth through hole.

As a further improvement of the present disclosure, the fifth blind hole, the sixth blind hole, the seventh blind hole and the eighth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole, a sixth blind hole, a seventh blind hole and an eighth blind hole, the first through hole, the second through hole, the third through hole and the fourth through hole respectively communicate with the first output port, the second output port, the third output port and the fourth output port, the movable valve plate is provided with a first flow guide hole and a second flow guide hole which communicate with the first input port, and the fixed valve plate and the movable valve plate have the following cooperation relationship: the first flow guide hole aligns with the eighth blind hole and then is closed by the eighth blind hole, and the second flow guide hole aligns with the fifth blind hole and then is closed by the fifth blind hole; or, the first flow guide hole partially aligns with the eighth blind hole and the first through hole and then communicates with the first through hole, and the second flow guide hole partially aligns with the fifth blind hole and the second through hole and then communicates with the second through hole; or, the first flow guide hole aligns with the first through hole and then communicates with the first through hole, and the second flow guide hole aligns with the second through hole and then communicates with the second through hole; or, the first flow guide hole aligns with the fifth blind hole and then is closed by the fifth blind hole, and the second flow guide hole aligns with the sixth blind hole and then is closed by the sixth blind hole; or, the first flow guide hole partially aligns with the fifth blind hole and the second through hole and then communicates with the second through hole, and the second flow guide hole partially aligns with the sixth blind hole and the third through hole and then communicates with the third through hole; or, the first flow guide hole aligns with the second through hole and then communicates with the second through hole, and the second flow guide hole aligns with the third through hole and then communicates with the third through hole; or, the first flow guide hole aligns with the sixth blind hole and then is closed by the sixth blind hole, and the second flow guide hole aligns with the seventh blind hole and then is closed by the seventh blind hole; or, the first flow guide hole partially aligns with the sixth blind hole and the third through hole and then communicates with the third through hole, and the second flow guide hole partially aligns with the seventh blind hole and the fourth through hole and then communicates with the fourth through hole; or, the first flow guide hole aligns with the third through hole and then communicates with the third through hole, and the second flow guide hole aligns with the fourth through hole and then communicates with the fourth through hole; or, the first flow guide hole aligns with the seventh blind hole and then is closed by the seventh blind hole, and the second flow guide hole aligns with the eighth blind hole and then is closed by the eighth blind hole; or, the first flow guide hole partially aligns with the seventh blind hole and the fourth through hole and then communicates with the fourth through hole, and the second flow guide hole partially aligns with the eighth blind hole and the first through hole and then communicates with the first through hole; or, the first flow guide hole aligns with the fourth through hole and then communicates with the fourth through hole, and the second flow guide hole aligns with the first through hole and then communicates with the first through hole.

As a further improvement of the present disclosure, the fifth blind hole, the sixth blind hole, the seventh blind hole and the eighth blind hole are each formed by a blind hole structure directly formed on the fixed valve plate, or are each a combination of a through hole formed in the fixed valve plate and a closed cavity formed in the valve seat body.

As a further improvement of the present disclosure, the input port includes a first input port, the output ports include a first output port, a second output port, a third output port and a fourth output port, the fixed valve plate is provided with a first through hole, a second through hole, a third through hole, a fourth through hole, a fifth blind hole, a sixth blind hole, a seventh blind hole and an eighth blind hole, the first through hole, the second through hole, the third through hole and the fourth through hole respectively communicate with the first output port, the second output port, the third output port and the fourth output port, the movable valve plate is provided with a first flow guide hole, a second flow guide hole, a third flow guide hole and a fourth flow guide hole which communicate with the first input port, and the fixed valve plate and the movable valve plate have the following cooperation relationship: the first flow guide hole aligns with the eighth blind hole and then is closed by the eighth blind hole, the second flow guide hole aligns with the fifth blind hole and then is closed by the fifth blind hole, the third flow guide hole aligns with the sixth blind hole and then is closed by the sixth blind hole, and the fourth flow guide hole aligns with the seventh blind hole and then is closed by the seventh blind hole; or, the first flow guide hole partially aligns with the eighth blind hole and the first through hole and then communicates with the first through hole, the second flow guide hole partially aligns with the fifth blind hole and the second through hole and then communicates with the second through hole, the third flow guide hole partially aligns with the sixth blind hole and the third through hole and then communicates with the third through hole, and the fourth flow guide hole partially aligns with the seventh blind hole and the fourth through hole and then communicates with the fourth through hole; or, the first flow guide hole aligns with the first through hole and then communicates with the first through hole, the second flow guide hole aligns with the second through hole and then communicates with the second through hole, the third flow guide hole aligns with the third through hole and then communicates with the third through hole, and the fourth flow guide hole aligns withs the fourth through hole and then communicates with the fourth through hole.

As a further improvement of the present disclosure, the fifth blind hole, the sixth blind hole, the seventh blind hole and the eighth blind hole are each formed by a blind hole structure directly formed on the fixed valve plate, or are each a combination of a through hole formed in the fixed valve plate and a closed cavity formed in the valve seat body.

Beneficial effects of the present disclosure: Due to the design of the straight flow channel inside the valve seat body, the direction of the flow channel will not be changed when the fluid passes through the valve seat body, which can effectively reduce the flow resistance against the fluid. Further, a valve core assembly formed by movable and fixed valve plates is arranged in the valve body, with one end of the movable valve plate being configured as an input port, and one end of the fixed valve plate being configured as an output port, after entering the valve, a fluid enters the valve core assembly through the input port, and then passes through the valve seat body, and finally flows out from the output port. The part from the input port to the valve core assembly is configured as a straight flow channel, and the part from the valve core assembly to the output port is similar to an elbow. This design produces a smaller water resistance as compared with the prior art in which a valve core assembly is used for direction change.

### BRIEF DESCRIPTION OF DRAWINGS

FIG. 1 is a schematic diagram of the internal structure of a fluid control valve usable for irrigation according to the present disclosure;
FIG. 2 is a schematic diagram of the internal structure of a valve body in Embodiment 1;
FIG. 3 is a schematic diagram of the internal structure of the valve body in Embodiment 1 from another perspective;
FIG.4 a to b are schematic structural diagrams of a valve core assembly in Embodiment 1, and FIG.4 c to e are schematic diagrams of working states of the valve core assembly;
FIG. 5 is a schematic diagram of the internal structure of a valve body in Embodiment 2;
FIG.6 a to b are schematic structural diagrams of a valve core assembly in Embodiment 2, and FIG.6 c to g are schematic diagrams of working states of the valve core assembly;
FIG.7 a to b are schematic structural diagrams of a valve core assembly in Embodiment 3;
FIG. 8 is a schematic diagram of the internal structure of a valve body in Embodiment 4;
FIG.9 a to b are schematic structural diagrams of a valve core assembly in Embodiment 4, and FIG.9 c to e are schematic diagrams of working states of the valve core assembly;
FIG. 10 is a schematic diagram of the internal structure of a valve body in Embodiment 5;
FIG.11 a to b are schematic structural diagrams of a valve core assembly in Embodiment 5, and FIG.11 c to e are schematic diagrams of working states of the valve core assembly;
FIG. 12 is a schematic diagram of the internal structure of a valve body in Embodiment 6;
FIG.13 a to b are schematic structural diagrams of a valve core assembly in Embodiment 6, and FIG.13 c to h are schematic diagrams of working states of the valve core assembly;
FIG.14 a to b are schematic structural diagrams of a valve core assembly in Embodiment 7, and FIG.14 c to e are schematic diagrams of working states of the valve core assembly;
FIG. 15 is a schematic diagram of the internal structure of a valve body in Embodiment 8;
FIG.16 a to b are schematic structural diagrams of a valve core assembly in Embodiment 8, and FIG.16 c to g are schematic diagrams of working states of the valve core assembly;
FIG. 17 is a schematic diagram of the internal structure of a valve body in Embodiment 9;
FIG.18 a to b are schematic structural diagrams of a valve core assembly in Embodiment 9, and FIG.18 c to j are schematic diagrams of working states of the valve core assembly;
FIG. 19 is a schematic diagram of the internal structure of a valve body in Embodiment 10;
FIG.20 a to b are schematic structural diagrams of a valve core assembly in Embodiment 10, and FIG.20 c to i are schematic diagrams of working states of the valve core assembly;
FIG. 21 is a schematic diagram of the internal structure of a valve body in Embodiment 11;
FIG.22 a to b are schematic structural diagrams of a valve core assembly in Embodiment 11, and FIG.22 c to i are schematic diagrams of working states of the valve core assembly;
FIG. 23 is a schematic diagram of the internal structure of a valve body in Embodiment 12;
FIG.24 a to b are schematic structural diagrams of a valve core assembly in Embodiment 12, and FIG.24 c to k are schematic diagrams of working states of the valve core assembly;
FIG.25 a to b are schematic structural diagrams of a valve core assembly in Embodiment 13, and FIG.25 c to k are schematic diagrams of working states of the valve core assembly;
FIG.26 a to b are schematic structural diagrams of a valve core assembly in Embodiment 14, and FIG.26 c to e are schematic diagrams of working states of the valve core assembly;
FIG. 27 is a schematic diagram of the internal structure of a valve body in Embodiment 15;
FIG.28 a to b are schematic structural diagrams of a valve core assembly in Embodiment 15, and FIG.28 c to l are schematic diagrams of working states of the valve core assembly;
FIG.29 a to b are schematic structural diagrams of a valve core assembly in Embodiment 16, and FIG.29 c to g are schematic diagrams of working states of the valve core assembly;
FIG. 30 is a schematic diagram of the internal structure of a valve body in Embodiment 17;
FIG.31 a to b are schematic structural diagrams of a valve core assembly in Embodiment 17, and FIG.31 c to e are schematic diagrams of working states of the valve core assembly;
FIG. 32 is a schematic diagram of the internal structure of a valve body in Embodiment 18;
FIG.33 a to b are schematic structural diagrams of a valve core assembly in Embodiment 18, and FIG.33 c to n are schematic diagrams of working states of the valve core assembly;
FIG.34 a to b are schematic structural diagrams of a valve core assembly in Embodiment 19, and FIG.34 c to h are schematic diagrams of working states of the valve core assembly;
FIG.35 a to b are schematic structural diagrams of a valve core assembly in Embodiment 20, and FIG.35 c to n are schematic diagrams of working states of the valve core assembly; and
FIG.36 a to b are schematic structural diagrams of a valve core assembly in Embodiment 21, and FIG.36 c to e are schematic diagrams of working states of the valve core assembly.

### DETAILED DESCRIPTION OF THE EMBODIMENTS

The present disclosure will be further detailed below in conjunction with the embodiments shown in the accompanying drawings.

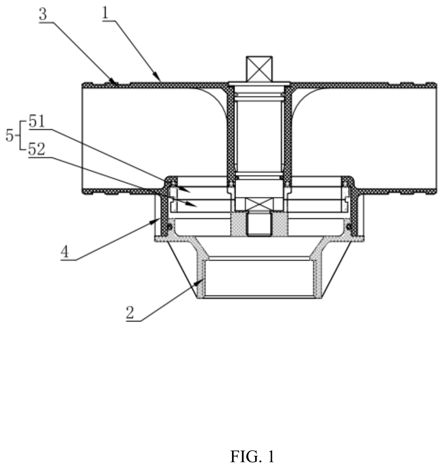

Referring to FIG. 1, the fluid control valve usable for irrigation in this embodiment includes:
a valve body 1 having at least one input port 2, at least one output port 3 and a valve seat body 4 which is provided therein with a straight flow channel, where the input port 2 and the output port 3 are respectively arranged at two ends of the straight flow channel and are communicated with each other by means of the straight flow channel; and
a valve core assembly 5 arranged in the valve seat body 4 and located in the straight flow channel to control the straight flow channel to connect the input port 2 and the output port 3 or close the input port 2 and the output port 3. In use of the control valve, a fluid may enter the valve seat body 4 through the input port 2, then reach the valve core assembly 5, and finally enter the output port 3. Due to the design of the straight flow channel in the valve seat body 4, a flow channel of the fluid from the valve core assembly 5 to the output port 3 can be approximately a straight flow channel, which causes smaller resistance to the fluid than a curved flow channel designed for the direction change of the valve core assembly 5 in the prior art.

Further, the valve core assembly 5 includes:
a fixed valve plate 51 fixedly mounted in the valve seat body 4, located in the straight flow channel, and at least provided with a through hole; and
a movable valve plate 52 rotatably arranged on the fixed valve plate 51 and at least provided with a flow guide hole, the movable valve plate 52 rotating on the fixed valve plate 51 to control the straight flow channel to connect the input port and the output port when the flow guide hole aligns with the through hole in the fixed valve plate 5, or to disconnect the input port from the output port when the flow guide hole does not align with the through hole in the fixed valve plate 51. In use, when the movable valve plate 52 is rotated, the straight flow channel is open and the fluid can pass through in the case where the guide hole aligns with the through hole of the fixed valve plate 51; and the straight flow channel is closed in the case where the guide hole does not align with the through hole of the fixed valve plate 51. In this embodiment, the fixed valve plate 51 and the movable valve plate 52 are combined into a flat valve structure, and the flow channel is controlled to be opened or closed by means of allowing the flow guide hole to align with or not align with the through hole. Moreover, the flow rate in the flow channel can also be controlled accurately by the flow guide hole partially aligning with the through hole. By configuring a plurality of through holes in the fixed valve plate 51, the effect of controlling a plurality of channels by one valve core assembly 5 can be achieved. The valve seat body 4 in this embodiment is a part of the valve body 1 that is only used for mounting the valve core assembly 5. The straight flow channel is a straight channel formed by a fluid passing through the valve core assembly 5. That is, the flow channel for the fluid to flow from one end of the valve core assembly 5 to the other end of the valve core assembly 5 is of a straight flow structure. For example, when a flat valve core is used as shown in FIG. 1, in use of the valve, a fluid first enters the input port 2 and then directly passes through the flow guide hole of the fixed valve plate 51 and the through hole of the movable valve plate 52 which align with each other, with minimal contact with the hole walls of the flow guide hole and the through hole. In this way, compared with the methods in the prior art, such as using a ball core to change the flow direction by means of an internal channel of the ball, and using a globe valve core to block/stop the fluid by means of a valve disc, the design of the present disclosure results in smaller resistance against the fluid. When used for irrigation, the design has a better resistance-reducing effect on high-viscosity fluids such as an integrated water-fertilizer mixture.

Further, the movable valve plate 52 is located at an end, facing the input port 2, of the fixed valve plate 51. Such an arrangement allows the fluid to first contact the movable valve plate 52 when entering the straight flow channel, and the movable valve plate 52 is subjected to the pressure of the fluid and will be pressed towards the fixed valve plate 51, thereby ensuring that the sealing effect of the movable valve plate 52 and the fixed valve plate is effectively maintained after long-term use.

Further, the fixed valve plate 51 is further provided with a blind hole, and closing of the straight flow channel is controlled by alignment of the blind hole with the flow guide hole. When the blind hole aligns with the flow guide hole, the passage of fluid is blocked. The design of the blind hole can achieve the closing effect of the valve on the one hand, and on the other hand, foreign matters scraped off when the movable valve plate 52 operates on the fixed valve plate 51 can be effectively stored, avoiding the problem that the valve core assembly 5 cannot operate due to the foreign matters being stuck between the movable valve plate 52 and the fixed valve plate 51.

Further, the blind hole is formed by a blind hole structure directly formed on the fixed valve plate 51, or is a combination of a through hole formed in the fixed valve plate 51 and a closed cavity 6 formed in the valve seat body 4. In practical use, ceramic plates are preferred for the fixed valve plate 51 and the movable valve plate 52. Accordingly, the blind hole is designed to be a combination of a through hole formed in the fixed valve plate 51 and the closed cavity 6 formed in the valve body. In this way, the production of the fixed valve plate 51 can be effectively facilitated.

Further, the output port 3 is arranged at an upper end of the valve seat body 4, the input port 2 is arranged at a lower end of the valve seat body 4, and a lower end of a control valve stem is inserted into the valve seat body 4 from top to bottom, and extends through the fixed valve plate 51 to be connected to the movable valve plate 52. With the above structure, the case where the movable valve plate 52 is located below and the fixed valve plate 51 is located above is realized. In this way, part of the fluid pressure can be offset by the gravity of the movable valve plate 52 in use, and the problem that the too tight cooperation between the movable valve plate 52 and the fixed valve plate 51 causes difficulty in rotating is solved. In this embodiment, in order to effectively drive the movable valve plate 52 by the control valve stem, a circular hole is formed at the center of the fixed valve plate 51 for the control valve stem to pass through, and a kidney-shaped hole or a plum blossom groove, a square hole or a spline is provided at the center of the movable valve plate 52, and such a transmission structure method is used to cooperate with the control valve stem, so that the control valve stem can accurately and effectively drive the movable valve plate 52 to rotate.

Thus based on the above-described basic structure of the fluid control valve usable for irrigation, the following embodiments are provided here.

### Embodiment 1

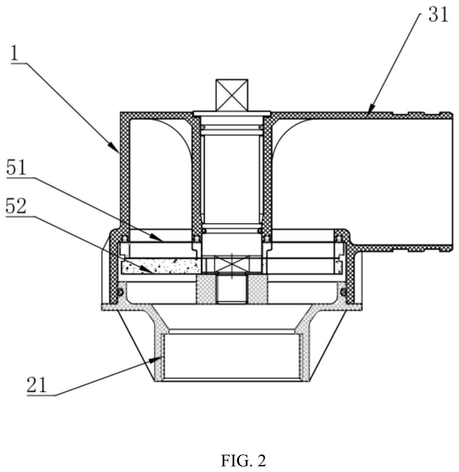

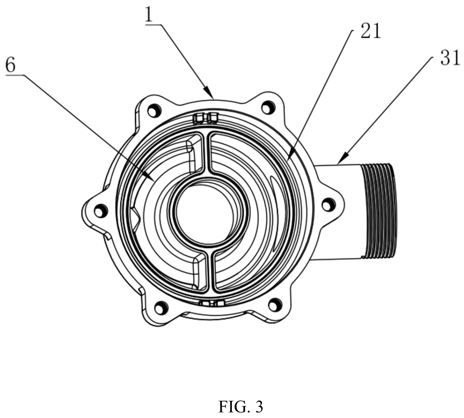

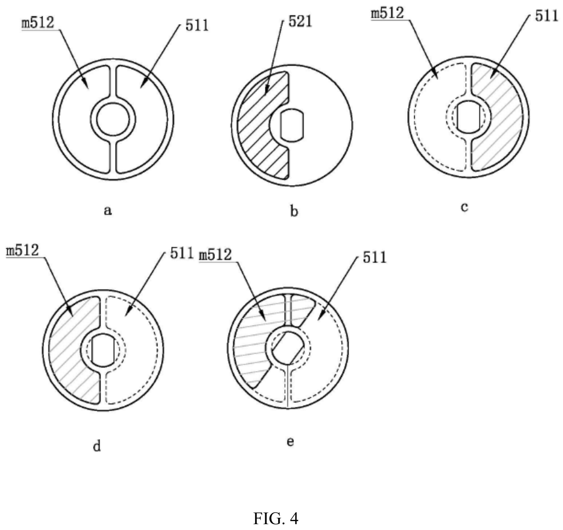

Referring to FIGS. 2 to 4, a fluid control valve structure is provided, which is a bisectional two-way (one in and one out) valve having an adjustable valve core opening and a closing function. In Embodiment 1, the input port 2 of the valve body 1 includes a first input port 21, and the output port 3 includes a first output port 31. The fixed valve plate 51 is provided with a first through hole 511 and a second blind hole 1512. The first through hole 511 communicates with the first output port 31. The movable valve plate 52 is provided with a first flow guide hole 521 which communicates with the first input port 21, as shown in FIG.3 a to b. The fixed valve plate 51 and the movable valve plate 52 have the following cooperation relationship: as shown in FIG.3 c to e, the first flow guide hole 521 aligns with the first through hole 511 and then communicates with the first through hole 511, and this means that the valve is in an open state. In this state, a fluid passes through the first input port 21, then passes through the first flow guide hole 521 and then the first through hole 511 to enter the output port 3, and is then conveyed to external equipment through the first output port 31. Or, the first flow guide hole 521 aligns with the second blind hole 1512 and then is closed by the second blind hole 1512, and this means that the valve is in a closed state. In this state, the fluid passes through the input port 2 and then passes through the first flow guide hole 521 but is blocked by the second blind hole 1512, and the fluid cannot enter the first output port 31 through the first through hole 511, and then cannot be conveyed to external equipment through the first output port 31. Or, the first flow guide hole 521 partially aligns with the first through hole 511 and then communicates with the first through hole, and this means that the valve is in an opening adjustment state. In this state, the fluid passes through the first input port 21, and then passes through the first flow guide hole 521 and then the first through hole 511 to enter the first output port 31, and is then conveyed to external equipment through the first output port 31. The difference from the above is that by changing the alignment area of the first flow guide hole 521 and the first through hole 511, the flow rate of the fluid passing through can be changed and the opening of the valve can be adjusted.

In Embodiment 1 described above, the second blind hole 1512 is formed by a blind hole structure directly formed on the fixed valve plate 15, or is a combination of a through hole formed in the fixed valve plate 51 and a closed cavity 6 formed in the valve seat body 4. In the case where a closed cavity 6 is arranged in the valve seat body 4, a water output cavity is also accordingly arranged to connect the first through hole 511 and the output port 3. The number and position of the closed cavities 6 are in one-to-one correspondence with through holes in the fixed valve plate which serve as blind holes. The number and position of the water output cavities are in one-to-one correspondence with through holes in the fixed valve plate. Generally speaking, the water output cavity aligns with the first through hole 511, and the water output cavity has a straight flow channel structure. An elbow design is used at the part where the water output cavity communicates with the output port 3 to realize adaptive connection according to the actual location of an irrigation nozzle. In this way, the design can be conveniently used in occasions where the direction of the existing farmland irrigation flow channel changes, and the resistance strength caused by the change in flow channel direction can be reduced.

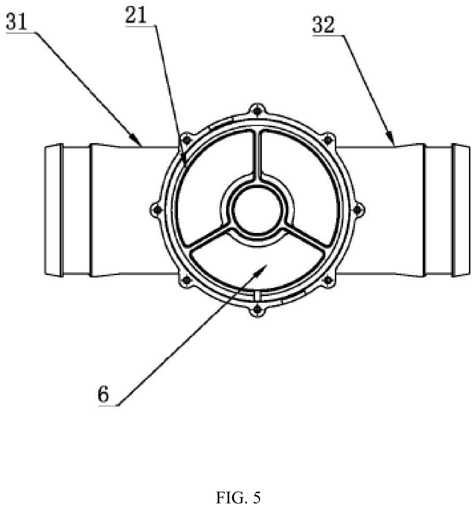

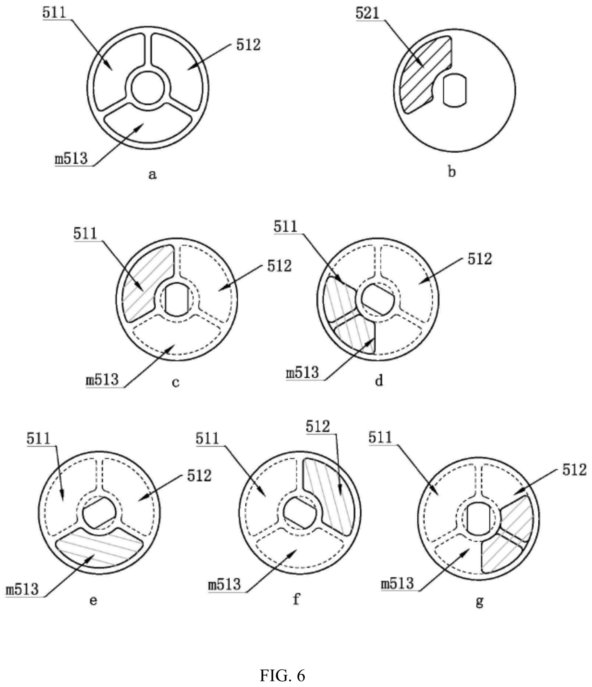

Embodiment 2: Referring to FIGS. 5 to 6, a fluid control valve structure is provided, which is a trisectional three-way (one in and two outs) valve having an adjustable valve core opening and a closing function. In Embodiment 2, the input port 2 of the valve body 1 includes a first input port 21, and the output ports 3 include a first output port 31 and a second output port 32. The fixed valve plate 51 is provided with a first through hole 511, a second through hole 512 and a third blind hole 1513. The first through hole 511 and the second through hole 512 respectively communicate with the first output port 31 and the second output port 32. The movable valve plate 52 is provided with a first flow guide hole 521 which communicates with the first input port 21, as shown in FIG.6 a to b. The fixed valve plate 51 and the movable valve plate 52 have the following cooperation relationship: As shown in FIG.6 c to g, the first flow guide hole 521 aligns with the first through hole 511 and then communicates with the first through hole 511, and this means that the valve is in a state of the first output port 31 being open. In this state, a fluid enters through the first input port 21, then passes through the first flow guide hole 521 and then the first through hole 511 to enter the first output port 31, and is then output through the first output port 31. Or, the first flow guide hole 521 partially aligns with the first through hole 511 and then communicates with the first through hole 511, and this means that the valve is in as state of opening and flow adjustment for the first output port 31. In this state, the fluid enters through the first input port 21 and then passes through the first flow guide hole 521 and the first through hole 511 and then enters the first output port 31 and is output through the first output port 31. In the process of the fluid passing through the first flow guide hole 521 and the first through hole 511, the flow rate will change with the degree of alignment of the first flow guide hole 521 with the first through hole 511. If the degree of alignment of the first flow guide hole 521 with the first through hole 511 is higher and the degree of alignment with the third blind hole 1513 is lower, the flow rate is higher; otherwise, the flow rate is lower. Or, the first flow guide hole 521 aligns with the second through hole 512 and then communicates with the second through hole 512, and this means that the valve is in a state of the second output port 32 being open. In this state, the flowing pattern of the fluid is similar to that in the state of the first output port 31 being open, and the fluid is finally output through the second output port 32. Or, the first flow guide hole 521 partially aligns with the second through hole 512 and then communicates with the second through hole 512, and this means that the valve is in a state of opening and flow adjustment for the second output port 32. In this state, the flowing pattern of the fluid is similar to that in the state of opening and flow adjustment for the first output port 31, and the fluid is finally output through the second output port 32, and flow adjustment is also achieved on the basis of the degree of alignment of the first flow guide hole 521 with the second through hole 512 and the degree of alignment of the first flow guide hole 521 with the third blind hole 1513. Or, the first flow guide hole 521 aligns with the third blind hole 1513 and then is closed by the third blind hole 1513, and this means that the valve is in a closed state. In this state, the fluid will be blocked by the third blind hole 1513 after passing through the first input port 21 and entering the first flow guide hole 521.

In Embodiment 2 described above, the third blind hole 1513 is formed by a blind hole structure directly formed on the fixed valve plate 51, or is a combination of a through hole formed in the fixed valve plate 51 and a closed cavity 6 formed in the valve seat body 4.

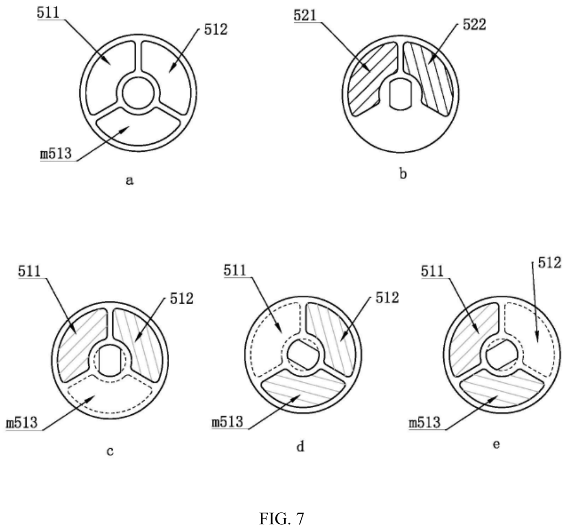

Embodiment 3: Referring to FIG. 7, a fluid control valve is provided, which is a trisectional three-way (one in and two outs) valve having single-output and dual-output functions and no closing function. In Embodiment 3, the structure of the valve body 1 is the same as that in Embodiment 2. The input port 2 of the valve body 1 includes a first input port 21, and the output ports 3 include a first output port 31 and a second output port 32. The fixed valve plate 51 is provided with a first through hole 511, a second through hole 512 and a third blind hole 1513. The first through hole 511 and the second through hole 512 respectively communicate with the first output port 31 and the second output port 32. The movable valve plate 52 is provided with a first flow guide hole 521 and a second flow guide hole 522 which communicate with the first input port 21, as shown in FIG.7 a to b. The fixed valve plate 51 and the movable valve plate 52 have the following cooperation relationship: As shown in FIG.7 c to e, the first flow guide hole 521 aligns with the first through hole 511 and then communicates with the first through hole 511, and the second flow guide hole 522 aligns with the second through hole 512 and then communicates with the second through hole 512, and this means that the valve is in a state of the first output port 31 and the second output port 32 being open. The fluid passes through the first input port 21, the first through hole 511 and the second through hole 512, and the first flow guide hole 521 and the second flow guide hole 522 and then enters the first output port 31 and the second output port 32, thus realizing a synchronous dual-output function. Or the first flow guide hole 521 aligns with the second through hole 512 and then communicates with the second through hole 512, and the second flow guide hole 522 aligns with the third blind hole 1513 and then is closed by the third blind hole 1513, and this means that the valve is in a state of the second output port 32 being open. Since the third blind hole 1513 replaces the above-mentioned first through hole 511, the fluid cannot enter the first through hole 511 through the second flow guide hole 522 and in this case, the first output port 31 is closed, and the fluid can enter the second through hole 512 through the first flow guide hole 521. Or, the first flow guide hole 521 aligns with the third blind hole 1513 and then is closed by the third blind hole 1513, and the second flow guide hole 522 aligns with the first through hole 511 and then communicates with the first through hole 511, and this means that the valve is in a state of the first output port 31 being open. Referring to the flowing patterns of the fluid described above, since the second through hole 512 corresponding to the second output port 32 is replaced by the third blind hole 1513, the second output port 32 is in a closed state in this case.

In Embodiment 3 described above, the third blind hole 1513 is formed by a blind hole structure directly formed on the fixed valve plate 51, or is a combination of a through hole formed in the fixed valve plate 51 and a closed cavity 6 formed in the valve seat body 4.

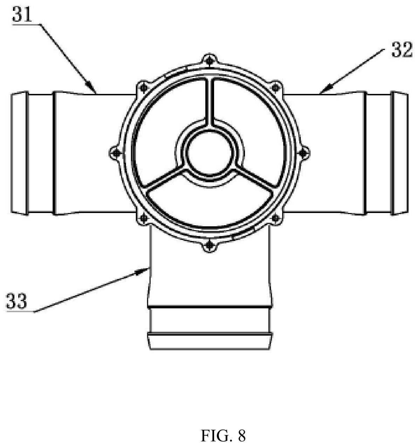

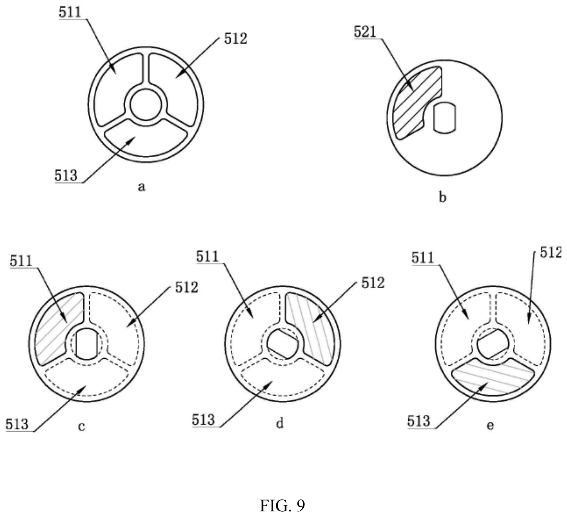

Embodiment 4: Referring to FIGS. 8 to 9, a trisectional four-way (one in and three outs) valve is provided, which has no closing function. In Embodiment 4, the input port 2 of the valve body 1 includes a first input port 21, and the output ports 3 include a first output port 31, a second output port 32 and a third output port 33. The fixed valve plate 51 is provided with a first through hole 511, a second through hole 512 and a third through hole 513 which respectively communicates with the first output port 31, the second output port 32 and the third output port 33. The movable valve plate 52 is provided with a first flow guide hole 521 which communicates with the first input port 21, as shown in FIG.9 a to b. The fixed valve plate 51 and the movable valve plate 52 have the following cooperation relationship: as shown in FIG.9 c to e, the first flow guide hole 521 aligns with the first through hole 511 and then communicates with the first through hole 511, and this means that the valve is in a state of the first output port 31 being open. Or, the first flow guide hole 521 aligns with the second through hole 512 and then communicates with the second through hole 512, and this means that the valve is in a state of the second output port 32 being open. Or, the first flow guide hole 521 aligns with the third through hole 513 and then communicates with the third through hole 513, and this means that the valve is in a state of the third output port 33 being open. During the above-described states of the three output ports 3 being open, the flowing patterns of the fluid are the same as those in Embodiment 3.

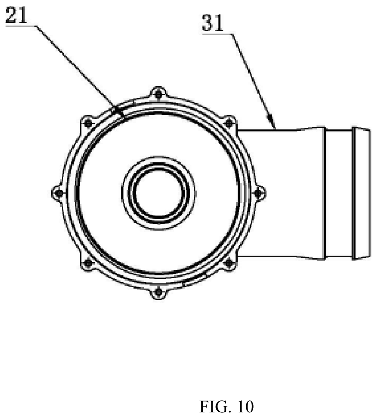

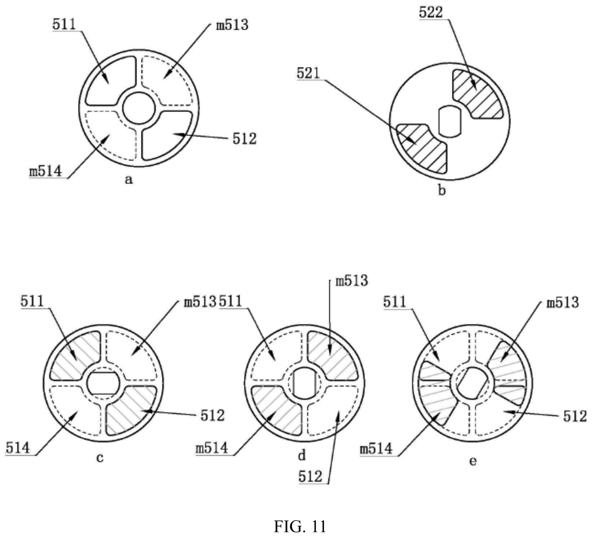

Embodiment 5: Referring to FIGS. 10 to 11, a quadrisectional two-way (one in and one out) valve is provided, which has adjustable valve core opening and a closing function. In Embodiment 5, the input port 2 of the valve body 1 includes a first input port 21, and the output port 3 includes a first output port 31. The fixed valve plate 51 is provided with a first through hole 511, a second through hole 512, a third blind hole 1513 and a fourth blind hole 1514. The first through hole 511 and the second through hole 512 communicate with the first output port 31. The movable valve plate 52 is provided with a first flow guide hole 521 and a second flow guide hole 522 which communicate with the first input port 21, as shown in FIG.11 a to b. The fixed valve plate 51 and the movable valve plate 52 have the following cooperation relationship: As shown in FIG.11 c to e, the first flow guide hole 521 aligns with the first through hole 511 and then communicates with the first through hole 511, and the second flow guide hole 522 aligns with the second through hole 512 and then communicates with the second through hole 512, and in this case, the valve is in an open state. Or, the first flow guide hole 521 aligns with the third blind hole 1513 and then is closed by the third blind hole 1513, and the second flow guide hole 522 aligns with the fourth blind hole 1514 and then is closed by the fourth blind hole 1514, and in this case, the valve is in a closed state. Or, the first flow guide hole 521 partially aligns with the first through hole 511 and the third blind hole 1513 and then communicates with the first through hole 511, and the second flow guide hole 522 partially aligns with the second through hole 512 and the fourth blind hole 1514 and then communicates with the second through hole 512, and in this case, the valve is in an opening adjustment state. In the above three states, the flowing patterns of the fluid are the same as those in Embodiment 2, except that the first flow guide hole 521 and the second flow guide hole 522 are arranged diagonally, the first through hole 511 and the second through hole 512 are arranged diagonally, and the third blind hole 1513 and the fourth blind hole 1514 are arranged diagonally. Therefore, compared with the "half" design in Embodiment 2, the design in this embodiment can realize switching of the alignment of the first flow guide hole 521 and the second flow guide hole 522 with the first through hole 511, the second through hole 512, the third blind hole 1513 and the fourth blind hole 1514 by rotating the movable valve plate 52 by a smaller angle. Therefore, the design in this embodiment ensures faster opening and closing actions as compared with the deign in Embodiment 2.

In Embodiment 5, the third blind hole 1513 and the fourth blind hole 1514 are each formed by a blind hole structure directly formed on the fixed valve plate 51, so that a large water output cavity is formed inside the valve body 1, effectively increasing the flow rate of the fluid.

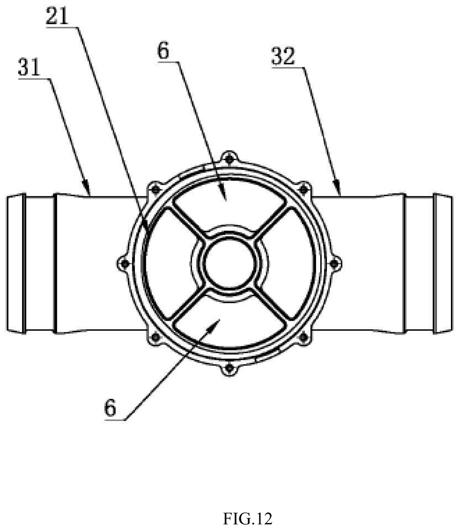

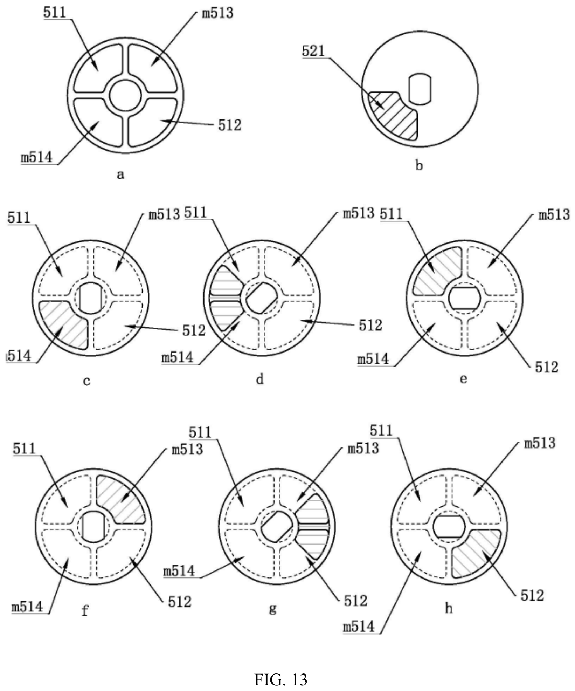

Embodiment 6: Referring to FIGS. 12 to 13, a quadrisectional three-way (one in and two outs) valve is provided, which has a single-output function, adjustable valve core opening and a closing function. In Embodiment 6, the input port 2 of the valve body 1 includes a first input port 21, and the output ports 3 include a first output port 31 and a second output port 32. The fixed valve plate 51 is provided with a first through hole 511, a second through hole 512, a third blind hole 1513 and a fourth blind hole 1514. The first through hole 511 and the second through hole 512 respectively communicate with the first output port 31 and the second output port 32. The movable valve plate 52 is provided with a first flow guide hole 521 which communicates with the first input port 21, as shown in FIG.13 a to b. The fixed valve plate 51 and the movable valve plate 52 have the following cooperation relationship: As shown in FIG.13 c to h, the first flow guide hole 521 aligns with the fourth blind hole 1514 and then is closed by the fourth blind hole 1514, and this means that the valve is in a closed state. Or, the first flow guide hole 521 partially aligns with the first through hole 511 and the fourth blind hole 1514 and then communicates with the first through hole 511, and this means that the valve is in a state of opening and flow adjustment for the first output port 31. In this state, the fluid enters through the first input port 21, and then passes through the first flow guide hole 521 and the first through hole 511 to the first output port 31. The flow rate is determined by the degree of alignment of the first flow guide hole 521 with the first through hole 511. Or, the first flow guide hole 521 aligns with the first through hole 511 and then communicates with the first through hole 511, and this means that the valve is in a state of the first output port 31 being open. In this state, the fluid enters through the first input port 21, and then passes through the first flow guide hole 521 and the first through hole 511 to the first output port 31. Or, the first flow guide hole 521 aligns with the third blind hole 1513 and then is closed by the third blind hole 1513, and this means that the valve is in a closed state. Or, the first flow guide hole 521 partially aligns with the second through hole 512 and the third blind hole 1513 and then communicates with the second through hole 512, and this means that the valve is in a state of opening and flow adjustment for the second output port 32. Or, the first flow guide hole 521 aligns with the second through hole 512 and then communicates with the second through hole 512, and this means that the valve is in a state of the second output port 32 being open. Compared with the design of Embodiment 2, this embodiment adopts a design of two closed positions, so that the valve can be closed by merely rotating the movable valve plate 52 by at most an angle of 180 degrees, thereby ensuring a faster closing action.

In Embodiment 6 described above, the third blind hole 1513 and the fourth blind hole 1514 are each formed by a blind hole structure directly formed on the fixed valve plate 51, or are each a combination of a through hole formed in the fixed valve plate 51 and a closed cavity 6 formed in the valve seat body 4.

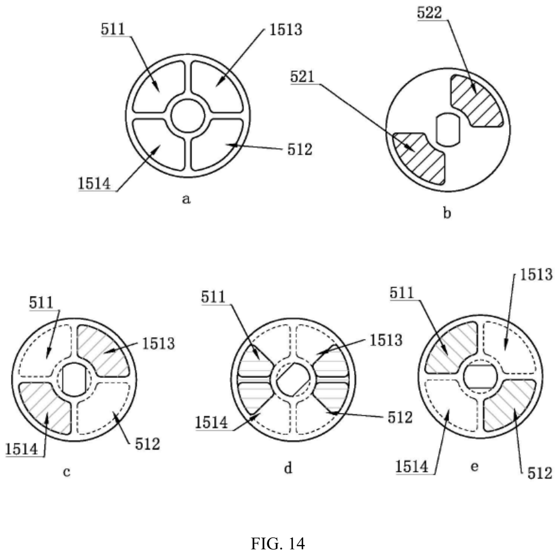

Embodiment 7: Referring to FIG. 14, a quadrisectional three-way (one in and two outs) valve is provided, which has a dual-output function, adjustable valve core opening and a closing function. In Embodiment 7, the structure of the valve body 1 is the same as that in Embodiment 6. The input port 2 of the valve body 1 includes a first input port 21, and the output ports 3 include a first output port 31 and a second output port 32. The fixed valve plate 51 is provided with a first through hole 511, a second through hole 512, a third blind hole 1513 and a fourth blind hole 1514. The first through hole 511 and the second through hole 512 respectively communicate with the first output port 31 and the second output port 32. The movable valve plate 52 is provided with a first flow guide hole 521 and the second flow guide hole 522 which communicate with the first input port 21, as shown in FIG.14 a to b. The fixed valve plate 51 and the movable valve plate 52 have the following cooperation relationship: As shown in FIG.14 c to e, the first flow guide hole 521 aligns with the fourth blind hole 1514 and then is closed by the fourth blind hole 1514, and the second flow guide hole 522 aligns with the third blind hole 1513 and then is closed by the third blind hole 1513, and this means that the valve is in a closed state. Or, the first flow guide hole 521 partially aligns with the first through hole 511 and the fourth blind hole 1514 and then communicates with the first through hole 511, and the second flow guide hole 522 partially aligns with the third blind hole 1513 and the second through hole 512 and then communicates with the second through hole 512, and this means that the valve is in a state of simultaneous opening and flow adjustment for the first output port 31 and the second output port 32. Or, the first flow guide hole 521 aligns with the first through hole 511 and then communicates with the first through hole 511, and the second flow guide hole 522 aligns with the second through hole 512 and then communicates with the second through hole 512, and this means that the valve is in a state of the first output port 31 and the second output port 32 being simultaneously open. Compared with the design in Embodiment 6 in which the first output port 31 and the second output port 32 work independently, Embodiment 7 can realize synchronous operation.

In Embodiment 7, the third blind hole 1513 and the fourth blind hole 1514 are each formed by a blind hole structure directly formed on the fixed valve plate 51, or are each a combination of a through hole formed in the fixed valve plate 51 and a closed cavity 6 formed in the valve seat body 4.

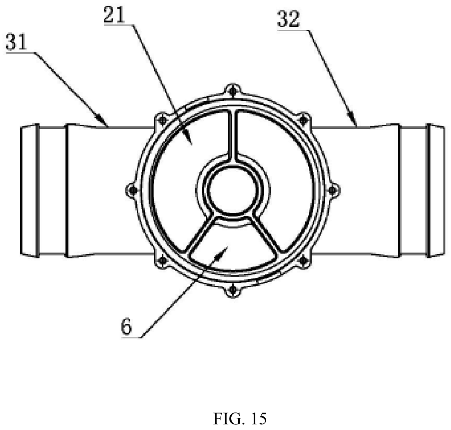

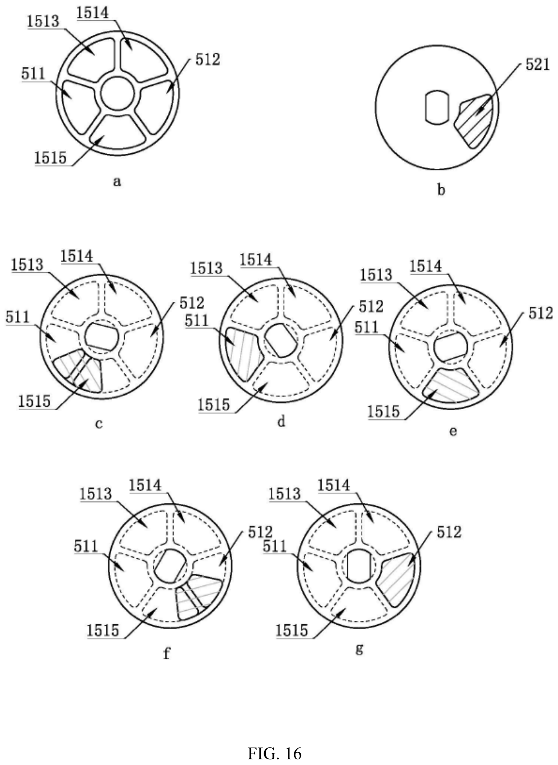

Embodiment 8: Referring to FIGS. 15 to 16, a fluid control valve is provided, which is a quinsectional three-way (one in and two outs) valve having adjustable valve core opening and a closing function. In Embodiment 8, the input port 2 of the valve body 1 includes a first input port 21, and the output ports 3 include a first output port 31 and a second output port 32. The fixed valve plate 51 is provided with a first through hole 511, a second through hole 512, a third blind hole 1513, a fourth blind hole 1514 and a fifth blind hole 1515. The first through hole 511 and the second through hole 512 respectively communicate with the first output port 31 and the second output port 32. The movable valve plate 52 is provided with a first flow guide hole 521 which communicates the first input port 21, as shown in FIG.16 a to b. The fixed valve plate 51 and the movable valve plate 52 have the following cooperation relationship: as shown in FIG.16 c to g, the first flow guide hole 521 partially aligns with the first through hole 511 and the fifth blind hole 1515 and then communicates with the first through hole 511, and this means that the valve is in a state of opening and flow adjustment for the first output port 31. In this state, the fluid enters from the first input port 21, passes through the first flow guide hole 521 and the first through hole 511, and then enters the first output port 31, and the flow rate is adjusted on the basis of the degree of alignment of the first flow guide hole 521 with the first through hole 511. Or, the first flow guide hole 521 aligns with the first through hole 511 and then communicates with the first through hole 511, and this means that the valve is in a state of the first output port 31 being open. In this state, the fluid enters from the first input port 21, passes through the first flow guide hole 521 and the first through hole 511, and then enters the first output port 31. Or, the first flow guide hole 521 aligns with the fifth blind hole 1515 and then is closed by the fifth blind hole 1515, and this means that the valve is in a closed state. In this state, the fluid enters from the first input port 21, passes through the first flow guide hole 521, and then is blocked by the fifth blind hole 1515. Or, the first flow guide hole 521 partially aligns with the second through hole 512 and the fifth blind hole 1515 and then communicates with the second through hole 512, and this means that the valve is in a state of opening and flow adjustment for the second output port 32. In this state, the fluid enters from the first input port 21, passes through the first flow guide hole 521 and the second through hole 512, and then enters the second output port 32, and the flow is adjusted on the basis of the degree of alignment of the first flow guide hole 521 with the second through hole 512. Or, the first flow guide hole 521 aligns with the second through hole 512 and then communicates with the second through hole 512, and the fluid enters from the first input port 21, passes through the first flow guide hole 521 and the second through hole 512, and then enters the second output port 32.

In Embodiment 8, the third blind hole 1513, the fourth blind hole 1514 and the fifth blind hole 1515 are each formed by a blind hole structure directly formed on the fixed valve plate 51; alternatively, the third blind hole 1513 and the fourth blind hole 1514 are each formed by a blind hole structure directly formed on the fixed valve plate 51 and the fifth blind hole 1515 is a combination of a through hole formed in the fixed valve plate 51 and a closed cavity 6 formed in the valve seat body 4.

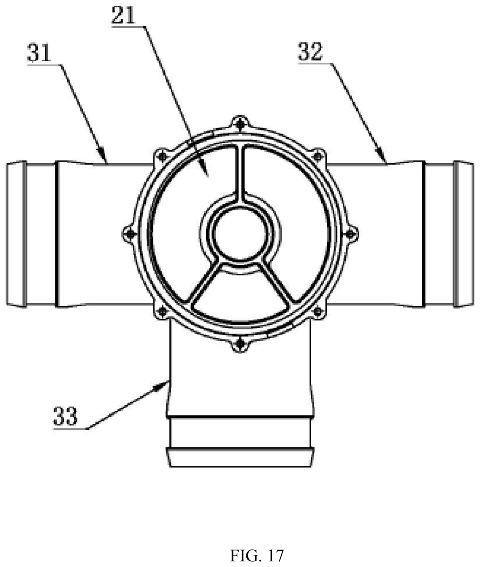

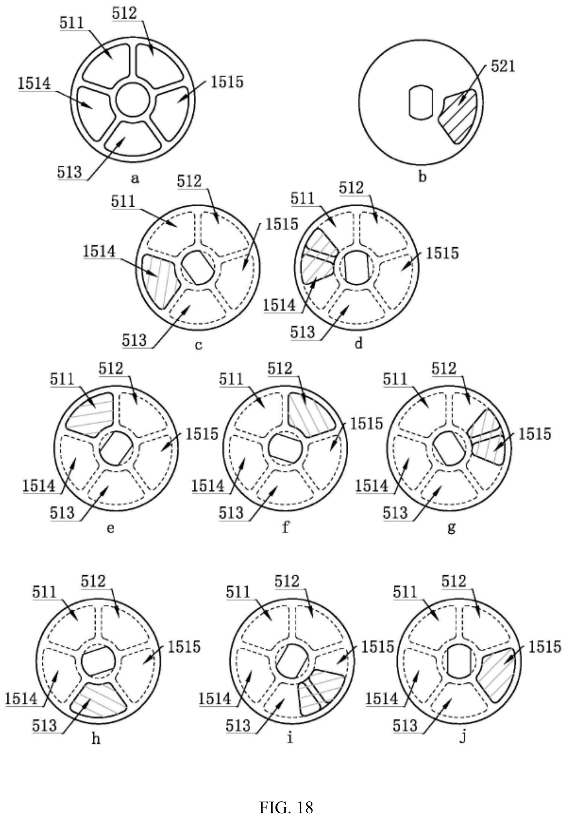

Embodiment 9: Referring to FIGS. 17 to 18, a fluid control vale is provided, which is a quinsectional four-way (one in and three outs) valve having adjustable valve core opening and a closing function. In Embodiment 9, the input port 2 of the valve body 1 includes a first input port 21, and the output ports 3 include a first output port 31, a second output port 32 and a third output port 33. The fixed valve plate 51 is provided with a first through hole 511, a second through hole 512, a third through hole 513, a fourth blind hole 1514 and a fifth blind hole 1515. The first through hole 511, the second through hole 512 and the third through hole 513 respectively communicate with the first output port 31, the second output port 32 and the third output port 33. The movable valve plate 52 is provided with a first flow guide hole 521 which communicates with the first input port 21, as shown in FIG.18 a to b. The fixed valve plate 51 and the movable valve plate 52 have the following cooperation relationship: as shown in FIG.18 c to j, the first flow guide hole 521 aligns with the fourth blind hole 1514 and then is closed by the fourth blind hole 1514, and this means that the valve is in a closed state. Or, the first flow guide hole 521 partially aligns with the first through hole 511 and the fourth blind hole 1514 and then communicates with the first through hole 511, and this means that the valve is in a state of opening and flow adjustment for the first output port 31. Or, the first flow guide hole 521 aligns with the first through hole 511 and then communicates with the first through hole 511, and this means that the valve is in a state of the first output port 31 being open. Or, the first flow guide hole 521 aligns with the second through hole 512 and then communicates with the second through hole 512, and this means that the valve is in a state of the second output port 32 being open. Or, the first flow guide hole 521 partially aligns with the second through hole 512 and the fifth blind hole 1515 and then communicates with the second through hole 512, and this means that the valve is in a state of opening and flow adjustment for the second output port 32. Or, the first flow guide hole 521 aligns with the third through hole 513 and then communicates with the third through hole 513, and this means that the valve is in a state of the third output port 33 being open. Or, the first flow guide hole 521 partially aligns with the fifth blind hole 1515 and the third through hole 513 and then communicates with the third through hole 513, and this means that the valve is in a state of opening and flow adjustment for the third output port 33. Or, the first flow guide hole 521 aligns with the fifth blind hole 1515 and then is closed by the fifth blind hole 1515, and this means that the valve is in a closed state. Compared with the design of Embodiment 10, this embodiment provides an additional third output port 33 as an output, thereby controlling more water channels for irrigation.

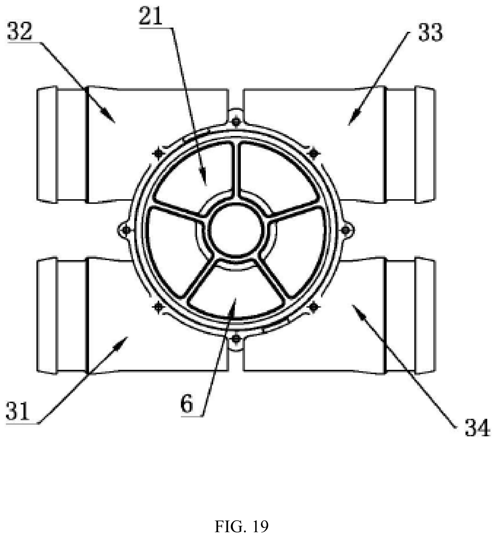

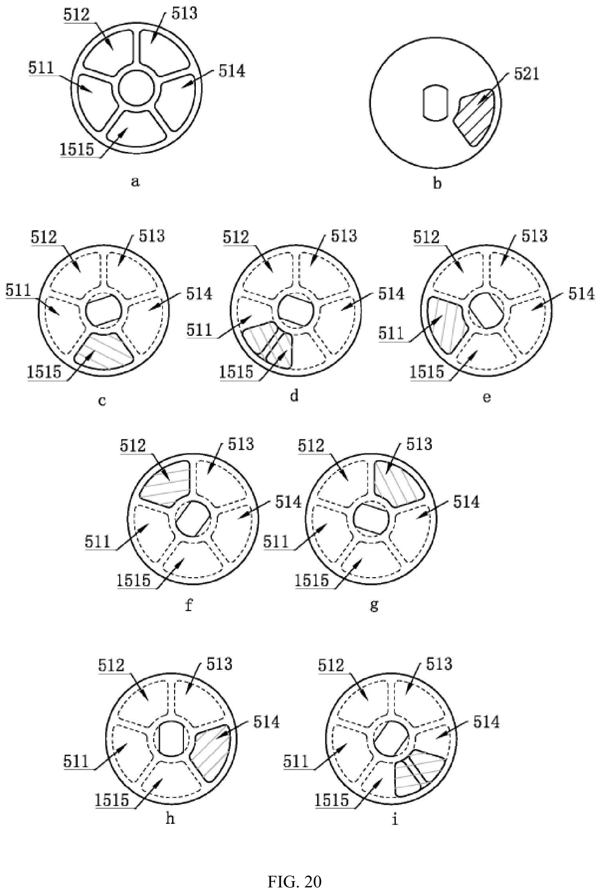

Embodiment 10: Referring to FIGS. 19 to 20, a fluid control vale is provided, which is a quinsectional five-way (one in and four outs) valve having a closing function. In Embodiment 10, the input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514 and a fifth blind hole 1515. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521 which communicates with the first input port 21, as shown in FIG.20 a to b. The fixed valve plate 51 and the movable valve plate 52 have the following cooperation relationship: As shown in FIG.20 c to i, the first flow guide hole 521 aligns with the fifth blind hole 1515 and then is closed by the fifth blind hole 1515, and this means that the valve is in a closed state. Or, the first flow guide hole 521 partially aligns with the first through hole 511 and the fifth blind hole 1515 and then communicates with the first through hole 511, and this means that the valve is in a state of opening and flow adjustment for the first output port 31. Or, the first flow guide hole 521 aligns with the first through hole 511 and then communicates with the first through hole 511, and this means that the valve is in a state of the first output port 31 being open. Or, the first flow guide hole 521 aligns with the second through hole 512 and then communicates with the second through hole 512, and this means that the valve is in a state of the second output port 32 being open. Or, the first flow guide hole 521 aligns with the third through hole 513 and then communicates with the third through hole 513, and this means that the valve is in a state of the third output port 33 being open. Or, the first flow guide hole 521 aligns with the fourth through hole 514 and then communicates with the fourth through hole 514, and this means that the valve is in a state of the fourth output port 34 being open. Or, the first flow guide hole 521 partially aligns with the fourth through hole 514 and the fifth blind hole 1515 and then communicates with the fourth through hole 514, and this means that the valve is in a state of opening and flow adjustment for the fourth output port 34. Compared with the design of Embodiment 9, this embodiment provides an additional fourth output port 34 as an output, thereby controlling more water channels for irrigation.

In Embodiment 10, the fifth blind hole 1515 is formed by a blind hole structure directly formed on the fixed valve plate 51, or the fifth blind hole 1515 is a combination of a through hole formed in the fixed valve plate 51 and a closed cavity 6 formed in the valve seat body 4.

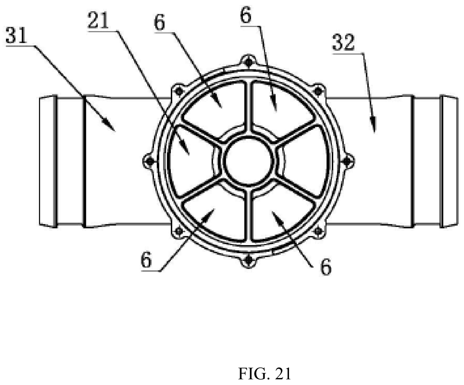

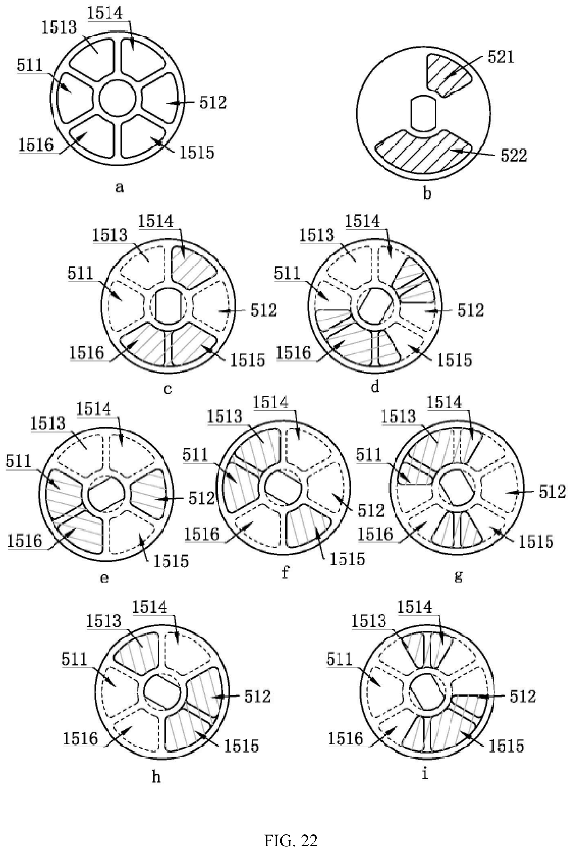

Embodiment 11: Referring to FIGS. 21 to 22, a sextisectional three-way (one in and two outs) valve is provided, which has a closing function, adjustable valve core opening and single-output and dual-output functions. In Embodiment 11, the input port 2 of the valve body 1 includes a first input port 21, and the output ports 3 include a first output port 31 and a second output port 32. The fixed valve plate 51 is provided with a first through hole 511, a second through hole 512, a third blind hole 1513, a fourth blind hole 1514, a fifth blind hole 1515 and a sixth blind hole 1516. The first through hole 511 and the second through hole 512 respectively communicate with the first output port 31 and the second output port 32. The movable valve plate 52 is provided with a first flow guide hole 521 and a second flow guide hole 522 which communicate with the first input port 21, as shown in FIG.22 a to b. The fixed valve plate 51 and the movable valve plate 52 have the following cooperation relationship: As shown in FIG.22 c to i, the first flow guide hole 521 aligns with the fourth blind hole 1514 and then is closed by the fourth blind hole 1514, and the second flow guide hole 522 aligns with the fifth blind hole 1515 and the sixth blind hole 1516 and then is closed by the sixth blind hole 1516, and this means that the valve is in a closed state. In this state, the fluid enters from the first input port 21, passes through the first flow guide hole 521 and the second flow guide hole 522, and is blocked by the fourth blind hole 1514, the fifth blind hole 1515 and the sixth blind hole 1516. Or, the first flow guide hole 521 partially aligns with the fourth blind hole 1514 and the second through hole 512 and then communicates with the second through hole 512, and the second flow guide hole 522 aligns with the sixth blind hole 1516, partially aligns with the first through hole 511 and the fifth blind hole 1515 and then communicates with the first through hole 511, and this means that the valve is in a state of simultaneous opening and flow adjustment for the first output port 31 and the second output port 32. In this state, the fluid enters from the first input port 21, passes through the first flow guide hole 521 and the second flow guide hole 522, and then enters the first through hole 511 and the second through hole 512, and then enter the first output port 31 and the second output port 32 respectively, and the flow rate of the second output port 32 is controlled on the basis of the degree of alignment of the first flow guide hole 521 with the second through hole 512, and the flow rate of the first output port 31 is controlled on the basis of the degree of alignment of the second flow guide hole 522 with the first through hole 511. Or, the first flow guide hole 521 aligns with the second through hole 512 and then communicates with the second through hole 512, and the second flow guide hole 522 aligns with the first through hole 511 and the sixth blind hole 1516 and then communicates with the first through hole 511, and this means that the valve is in a state of the first output port 31 and the second output port 32 being simultaneously open. In this state, the fluid enters from the first input port 21, passes through the first flow guide hole 521 and the second flow guide hole 522, and then enters the first through hole 511 and the second through hole 512, and then enters the first output port 31 and the second output port 32 respectively. Or the first flow guide hole 521 aligns with the fifth blind hole 1515 and then is closed by the fifth blind hole 1515, and the second flow guide hole 522 aligns with the first through hole 511 and the third blind hole 1513 and then communicates with the first through hole 511, and this means that the valve is in a state of the first output port 31 being open. In this state, the fluid enters from the first input port 21, passes through the second flow guide hole 522 and the first through hole 511, and then enters the first output port 31. Or, the first flow guide hole 521 partially aligns with the fifth blind hole 1515 and the sixth blind hole 1516 and then is closed by the sixth blind hole 1516, and the second flow guide hole 522 partially aligns with the first through hole 511 and the fourth blind hole 1514 and aligns with the third blind hole 1513 and then communicates with the first through hole 511, and this means that the valve is in a state of opening and flow adjustment for the first output port 31. In this state, the fluid enters from the first input port 21, passes through the second flow guide hole 522 and the first through hole 511, and then enters the first output port 31, and the flow rate is controlled on the basis of the degree of alignment of the second flow guide hole 522 with the first through hole 511. Or, the first flow guide hole 521 aligns with the third blind hole 1513 and then is closed by the third blind hole 1513, and the second flow guide hole 522 aligns with the second through hole 512 and the fifth blind hole 1515 and then communicates with the second through hole 512, and this means that the valve is in a state of the second output port 32 being open. In this state, the fluid enters from the first input port 21, passes through the second flow guide hole 522 and the second through hole 512, and then enters the second output port 32. Or the first flow guide hole 521 partially aligns with the third blind hole 1513 and the fourth blind hole 1514 and then is closed by the fourth blind hole 1514, and the second flow guide hole 522 partially aligns with the second through hole 512 and the sixth blind hole 1516 and aligns with the fifth blind hole 1515 and then communicates with the second through hole 512, and this means that the valve is in a state of opening and flow adjustment for the second output port 32. In this state, the fluid enters from the first input port 21, passes through the second flow guide hole 522 and the second through hole 512, enters the second output port 32, and the flow rate is controlled on the basis of the degree of alignment of the second flow guide hole 522 with the second through hole 512.

In Embodiment 11, the third blind hole 1513, the fourth blind hole 1514, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

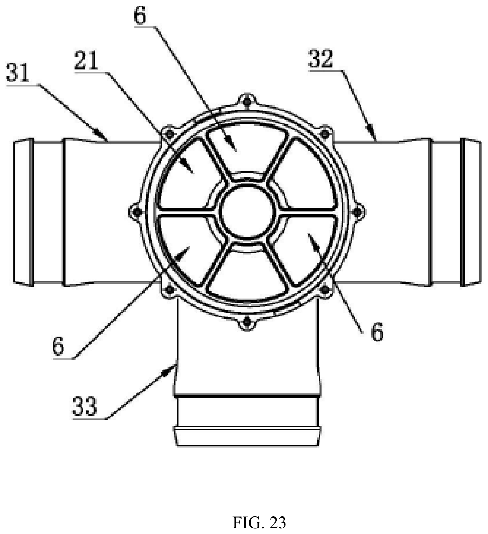

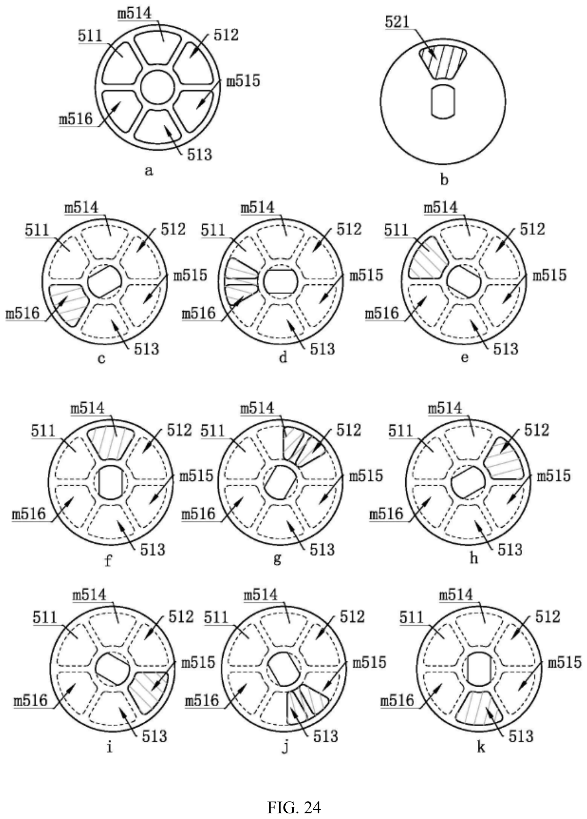

Embodiment 12: Referring to FIGS. 23 to 24, a fluid control vale is provided, which is a sextisectional four-way (one in and three outs) valve having a closing function, adjustable valve core opening and a single-output function. In Embodiment 12, the input port 2 of the valve body 1 includes a first input port 21, and the output ports 3 include a first output port 31, a second output port 32 and a third output port 33. The fixed valve plate 51 is provided with a first through hole 511, a second through hole 512, a third through hole 513, a fourth blind hole 1514, a fifth blind hole 1515 and a sixth blind hole 1516. The first through hole 511, the second through hole 512 and the third through hole 513 respectively communicate with the first output port 31, the second output port 32 and the third output port 33. The movable valve plate 52 is provided with a first flow guide hole 521 which communicates with the first input port 21, as shown in FIG.24 a to b. The fixed valve plate 51 and the movable valve plate 52 have the following cooperation relationship: As shown in FIG.24 c to k, the first flow guide hole 521 aligns with the sixth blind hole 1516 and then is closed by the sixth blind hole 1516, and this means that the valve is in a closed state. Or, the first flow guide hole 521 partially aligns with the first through hole 511 and the sixth blind hole 1516 and then communicates with the first through hole 511, and this means that the valve is in a state of opening and flow adjustment for the first output port 31. Or, the first flow guide hole 521 aligns with the first through hole 511 and communicates with the first through hole 511, and this means that the valve is in a state of the first output port 31 being open. Or, the first flow guide hole 521 aligns with the fourth blind hole 1514 and then is closed by the fourth blind hole 1514, and this means that the valve is in a closed state. Or, the first flow guide hole 521 partially aligns with the second through hole 512 and the fourth blind hole 1514 and then communicates with the second through hole 512, and this means that the valve is in a state of opening and flow adjustment for the second output port. Or, the first flow guide hole 521 aligns with the second through hole 512 and then communicates with the second through hole 512, and this means that the valve is in a state of the second output port 32 being open. Or, the first flow guide hole 521 aligns with the fifth blind hole 1515 and then is closed by the fifth blind hole 1515, and this means that the valve is in a closed state. Or, the first flow guide hole 521 partially aligns with the third through hole 513 and the fifth blind hole 1515 and then communicates with the third through hole 513, and this means that the valve is in a state of opening and flow adjustment for the third output port 33. Or the first flow guide hole 521 aligns with the third through hole 513 and then communicates with the third through hole 513, and this means that the valve is in a state of the third output port 33 being open. Compared with the design of Embodiment 11, the design of this embodiment provides three output ports to work and also provide three closed positions simultaneously to increase the closing speed of the valve.

In Embodiment 12, the fourth blind hole 1514, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

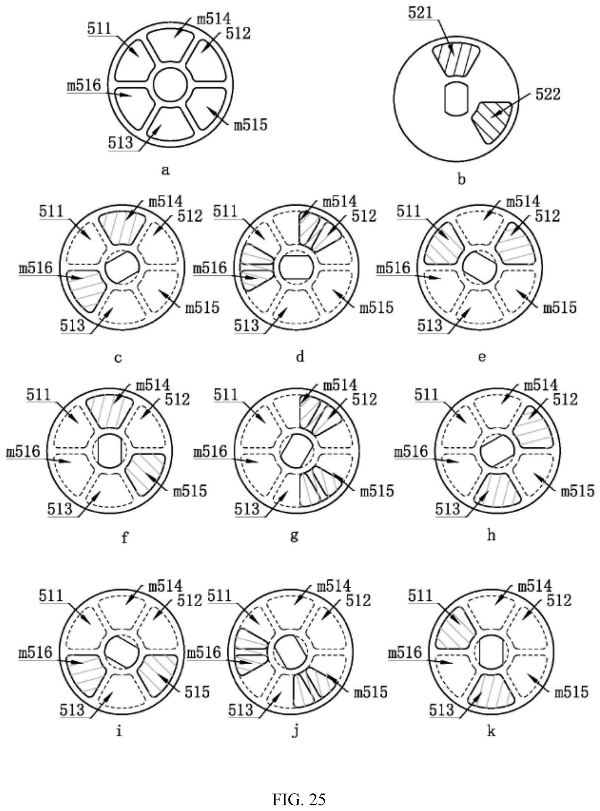

Embodiment 13: Referring to FIG. 25, a fluid control vale is provided, which is a sextisectional four-way (one in and three outs) valve having a closing function and adjustable valve core opening and capable of dual-output from two adjacent output ports. In Embodiment 13, the structure of the valve body 1 is the same as that in Embodiment 12. The input port 2 of the valve body 1 includes a first input port 21, and the output ports 3 include a first output port 31, a second output port 32 and a third output port 33. The fixed valve plate 51 is provided with a first through hole 511, a second through hole 512, a third through hole 513, a fourth blind hole 1514, a fifth blind hole 1515 and a sixth blind hole 1516. The first through hole 511, the second through hole 512 and the third through hole 513 respectively communicate with the first output port 31, the second output port 32 and the third output port 33. The movable valve plate 52 is provided with a first flow guide hole 521 and a second flow guide hole 522 which communicate with the first input port 21, as shown in FIG.25 a to b. The fixed valve plate 51 and the movable valve plate 52 have the following cooperation relationship: As shown in FIG.25 c to k, the first flow guide hole 521 aligns with the sixth blind hole 1516 and then is closed by the sixth blind hole 1516, and the second flow guide hole 522 aligns with the fourth blind hole 1514 and then is closed by the fourth blind hole 1514, and this means that the valve is in a closed state. Or, the first flow guide hole 521 partially aligns with the first through hole 511 and the sixth blind hole 1516 and then communicates with the first through hole 511, and the second flow guide hole 522 partially aligns with the fourth blind hole 1514 and the second through hole 512 and then communicates with the second through hole 512, and this means that the valve is in a state of simultaneous opening and flow adjustment for the first output port 31 and the second output port 32. Or, the first flow guide hole 521 aligns with the first through hole 511 and then communicates with the first through hole 511, and the second flow guide hole 522 aligns with the second through hole 512 and then communicates with the second through hole 512, and this is a state of the first output port 31 and the second output port 32 being simultaneously open. Or, the first flow guide hole 521 aligns with the fourth blind hole 1514 and then is closed by the fourth blind hole 1514, and the second flow guide hole 522 aligns with the fifth blind hole 1515 and then is closed by the fifth blind hole 1515, and this means that the valve is in a closed state. Or, the first flow guide hole 521 partially aligns with the second through hole 512 and the fourth blind hole 1514 and then communicates with the second through hole 512, and the second flow guide hole 522 partially aligns with the fifth blind hole 1515 and the third through hole 513 and then communicates with the third through hole 513, and this means that the valve is in a state of simultaneous opening and flow adjustment for the second output port 32 and the third output port 33. Or, the first flow guide hole 521 aligns with the second through hole 512 and then communicates with the second through hole 512, and the second flow guide hole 522 aligns with the third through hole 513 and then communicates with the third through hole 513, and this means that the valve is in a state of the second output port 32 and the third output port 33 being simultaneously open. Or, the first flow guide hole 521 aligns with the fifth blind hole 1515 and then is closed by the fifth blind hole 1515, and the second flow guide hole 522 aligns with the sixth blind hole 1516 and then is closed by the sixth blind hole 1516, and this means that the valve is in a closed state. Or, the first flow guide hole 521 partially aligns with the third through hole 513 and the fifth blind hole 1515 and then communicates with the third through hole 513, and the second flow guide hole 522 partially aligns with the sixth blind hole 1516 and the first through hole 511 and then communicates with the first through hole 511, and this means that the valve is in a state of simultaneous opening and flow adjustment for the first output port 31 and the third output port 33. Or, the first flow guide hole 521 aligns with the third through hole 513 and then communicates with the third through hole 513, and the second flow guide hole 522 aligns with the first through hole 511 and then communicates with the first through hole 511, and this means that the valve is in a state of the first output port 31 and the third output port 33 being simultaneously open. Compared with Embodiment 11, Embodiment 13 not only provides an additional third output port 33, but also provides the function that any two output ports of the first output port 31, the second output port 32, and the third output port 33 work together.

In Embodiment 13, the fourth blind hole 1514, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

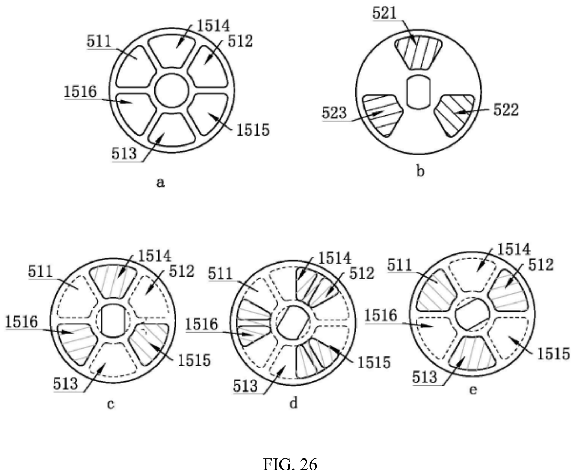

Embodiment 14: Referring to FIG. 26, a fluid control vale is provided, which is a sextisectional four-way (one in and three outs) valve having a closing function, adjustable valve core opening and a simultaneous three-output function. In Embodiment 14, the structure of the valve body 1 is the same as that in Embodiment 12. The input port 2 of the valve body 1 includes a first input port 21, and the output ports 3 include a first output port 31, a second output port 32 and a third output port 33. The fixed valve plate 51 is provided with a first through hole 511, a second through hole 512, a third through hole 513, a fourth blind hole 1514, a fifth blind hole 1515 and a sixth blind hole 1516. The first through hole 511, the second through hole 512 and the third through hole 513 respectively communicate with the first output port 31, the second output port 32 and a third output port 33. The movable valve plate 52 is provided with a first flow guide hole 521, a second flow guide hole 522 and a third flow guide hole 523 which communicate with the first input port 21, as shown in FIG.26 a to b. The fixed valve plate 51 and the movable valve plate 52 have the following cooperation relationship: As shown in FIG.26 c to e, the first flow guide hole 521 aligns with the sixth blind hole 1516 and then is closed by the sixth blind hole 1516, the second flow guide hole 522 aligns with the fourth blind hole 1514 and then is closed by the fourth blind hole 1514, and the third flow guide hole 523 aligns with the fifth blind hole 1515 and then is closed by the fifth blind hole 1515, and this means that the valve is in a closed state. Or, the first flow guide hole 521 partially aligns with the first through hole 511 and the sixth blind hole 1516 and then communicates with the first through hole 511, the second flow guide hole 522 partially aligns with the fourth blind hole 1514 and the second through hole 512 and then communicates with the second through hole 512, and the third flow guide hole 523 partially aligns with the fifth blind hole 1515 and the third through hole 513 and then communicates with the third through hole 513, and this means that the valve is in a state of simultaneous opening and flow adjustment for the first output port 31, the second output port 32 and the third output port 33. Or, the first flow guide hole 521 aligns with the first through hole 511 and then communicates with the first through hole 511, the second flow guide hole 522 aligns with the second through hole 512 and then communicates with the second through hole 512, and the third flow guide hole 523 aligns with the third through hole 513 and then communicates with the third through hole 513, and this means that the valve is in a state of the first output port 31, the second output port 32 and the third output port 33 being simultaneously open. Compared with the design of Embodiment 7, this embodiment provides the functions that the three ports can work simultaneously.

In Embodiment 14, the fourth blind hole 1514, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

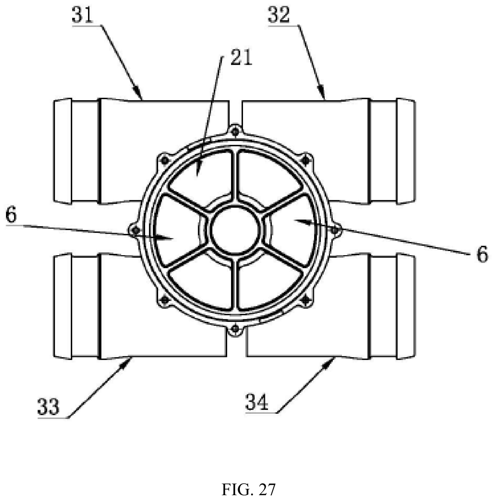

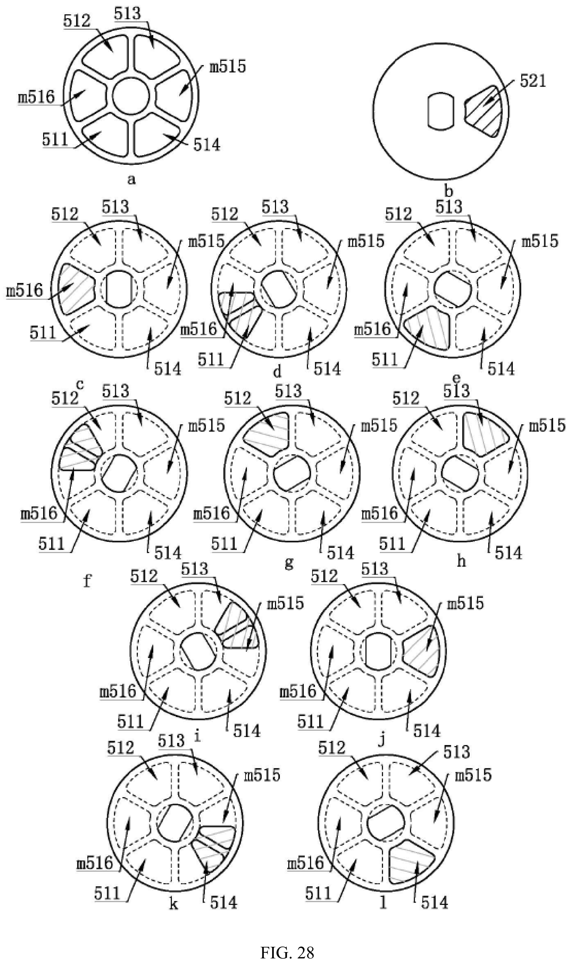

Embodiment 15: Referring to FIGS. 27 to 28, a fluid control vale is provided, which is a sextisectional five-way (one in and four outs) valve having a closing function, adjustable valve core opening and a single-output function. In Embodiment 15, the input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515 and a sixth blind hole 1516. The first through hole 511, the second through hole 512, the third through hole 513 and the fourth through hole 514 respectively communicates with the first output port 31, the second output port 32, the third output port 33 and the fourth output port 34. The movable valve plate 52 is provided with a first flow guide hole 521 which communicates with the first input port 21, as shown in FIG.28 a to b. The fixed valve plate 51 and the movable valve plate 52 have the following cooperation relationship: As shown in FIG.28 c to l, the first flow guide hole 521 aligns with the sixth blind hole 1516 and then is closed by the sixth blind hole 1516, and this means that the valve is in a closed state. Or, the first flow guide hole 521 partially aligns with the first through hole 511 and the sixth blind hole 1516 and then communicates with the first through hole 511, and this means that the valve is in a state of opening and flow adjustment for the first output port 31. Or, the first flow guide hole 521 aligns with the first through hole 511 and then communicates with the first through hole 511, and this means that the valve is in a state of the first output port 31 being open. Or, the first flow guide hole 521 partially aligns with the sixth blind hole 1516 and the second through hole 512 and then communicates with the second through hole 512, and this means that the valve is in a state of opening and flow adjustment for the second output port 32. Or, the first flow guide hole 521 aligns with the second through hole 512 and then communicates with the second through hole 512, and this means that the valve is in a state of the second output port 32 being open. Or, the first flow guide hole 521 aligns with the third through hole 513 and then communicates with the third through hole 513, and this means that the valve is in a state of the third output port 33 being open. Or, the first flow guide hole 521 partially aligns with the third through hole 513 and the fifth blind hole 1515 and then communicates with the third through hole 513, and this means that the valve is in a state of opening and flow adjustment for the third output port 33. Or, the first flow guide hole 521 aligns with the fifth blind hole 1515 and then is closed by the fifth blind hole 1515, and this means that the valve is in a closed state. Or, the first flow guide hole 521 partially aligns with the fifth blind hole 1515 and the fourth through hole 514 and then communicates with the fourth through hole 514, and this means that the valve is in a state of opening and flow adjustment for the fourth output port 34. Or, the first flow guide hole 521 aligns with the fourth through hole 514 and then communicates with the fourth through hole 514, and this means that the valve is in a state of the fourth output port 34 being open. Compared with Embodiment 14, this embodiment achieves a function of switching the four output ports to work independently.

In Embodiment 15, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

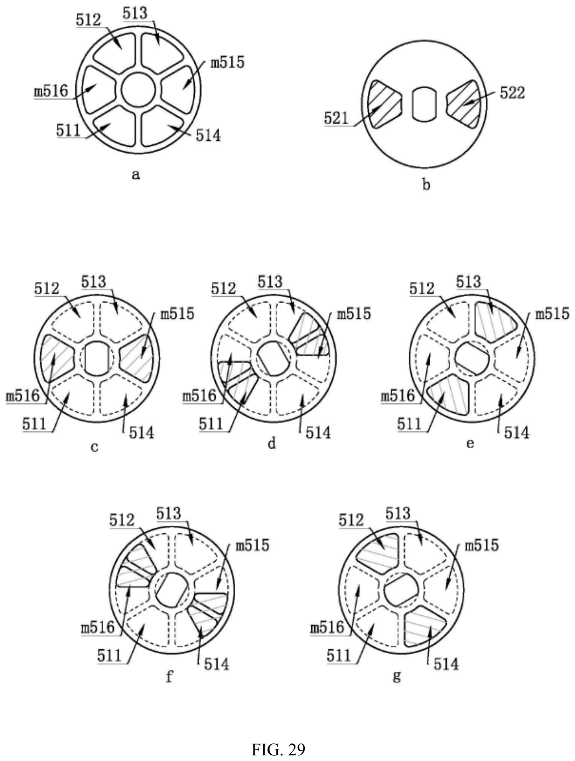

Embodiment 16: Referring to FIG. 29, a sextisectional five-way (one in and four outs) valve is provided, which has a closing function, adjustable valve core opening and a diagonal dual-output function. In Embodiment 16, the structure of the valve body 1 is the same as that in Embodiment 15. The input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515 and a sixth blind hole 1516. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521 and a second flow guide hole 522 which communicate with the first input port 21, as shown in FIG.29 a to b. The fixed valve plate 51 and the movable valve plate 52 have the following cooperation relationship: As shown in FIG.29 c to g, the first flow guide hole 521 aligns with the sixth blind hole 1516 and then is closed by the sixth blind hole 1516, and the second flow guide hole 522 aligns with the fifth blind hole 1515 and then is closed by the fifth blind hole 1515, and this means that the valve is in a closed state. Or, the first flow guide hole 521 partially aligns with the first through hole 511 and the sixth blind hole 1516 and then communicates with the first through hole 511, and the second flow guide hole 522 partially aligns with the third through hole 513 and the fifth blind hole 1515 and then communicates with the third through hole 513, and this means that the valve is in a state of simultaneous opening and flow adjustment for the first output port 31 and the third output port 33. Or, the first flow guide hole 521 aligns with the first through hole 511 and then communicates with the first through hole 511, and the second flow guide hole 522 aligns with the third through hole 513 and then communicates with the third through hole 513, and this means that the valve is in a state of the first output port 31 and the third output port 33 being simultaneously open. Or, the first flow guide hole 521 partially aligns with the sixth blind hole 1516 and the second through hole 512 and then communicates with the second through hole 512, and the second flow guide hole 522 partially aligns with the fifth blind hole 1515 and the fourth through hole 514 and then communicates with the fourth through hole 514, and this means that the valve is in a state of simultaneous opening and flow adjustment for the second output port 32 and the fourth output port 34. Or, the first flow guide hole 521 aligns with the second through hole 512 and then communicates with the second through hole 512, and the second flow guide hole 522 aligns with the fourth through hole 514 and communicates with the fourth through hole 514, and this means that the valve is in a state of the second output port 32 and the fourth output port 34 being simultaneously open.

In Embodiment 16, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

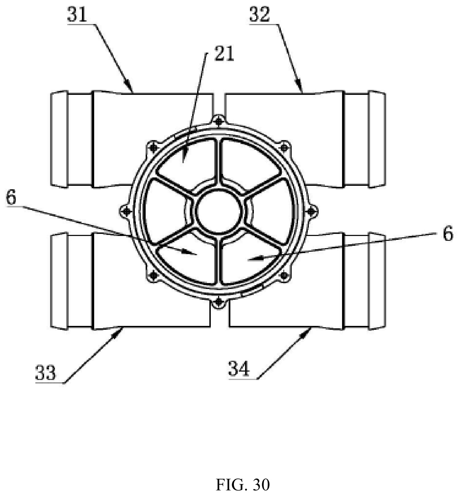

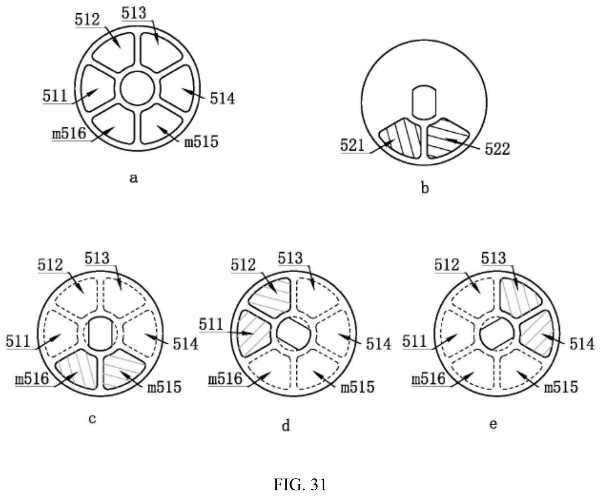

Embodiment 17: Referring to FIGS. 30 to 31, a fluid control valve is provided, which is a sextisectional five-way (one in and four outs) valve having a closing function and a same-side dual-output function. In Embodiment 17, the structure of the valve body 1 is the same as that in Embodiment 15. The input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515 and a sixth blind hole 1516. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521 and a second flow guide hole 522 which communicate with the first input port 21, as shown in FIG.31 a to b. The fixed valve plate 51 and the movable valve plate 52 have the following cooperation relationship: As shown in FIG.31 c to e, the first flow guide hole 521 aligns with the sixth blind hole 1516 and then is closed by the sixth blind hole 1516, and the second flow guide hole 522 aligns with the fifth blind hole 1515 and then is closed by the fifth blind hole 1515, and this means that the valve is in a closed state. Or, the first flow guide hole 521 aligns with the second through hole 512 and then communicates with the second through hole 512, and the second flow guide hole 522 aligns with the first through hole 511 and communicates with the first through hole 511, and this means that the valve is in a state of the first output port 31 and the second output port 32 being simultaneously open. Or, the first flow guide hole 521 aligns with the fourth through hole 514 and then communicates with the fourth through hole 514, and the second flow guide hole 522 aligns with the third through hole 513 and communicates with the third through hole 513, and this means that the valve is in a state of the third output port 33 and the fourth output port 34 being simultaneously open.

In Embodiment 17, the fifth blind hole 1515 and the sixth blind hole 1516 are each formed by a blind hole structure directly formed on the fixed valve plate 51, or are each a combination of a through hole formed in the fixed valve plate 51 and a closed cavity 6 formed in the valve seat body 4.

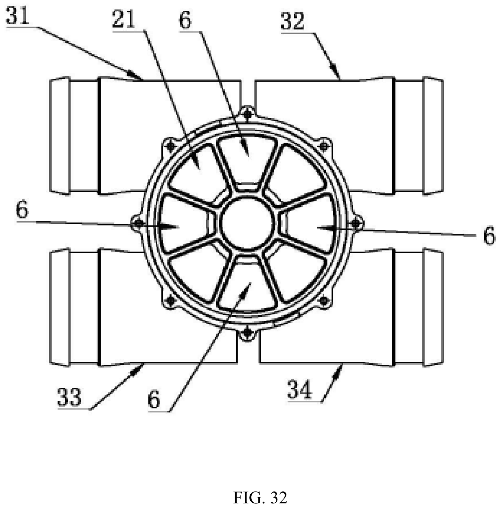

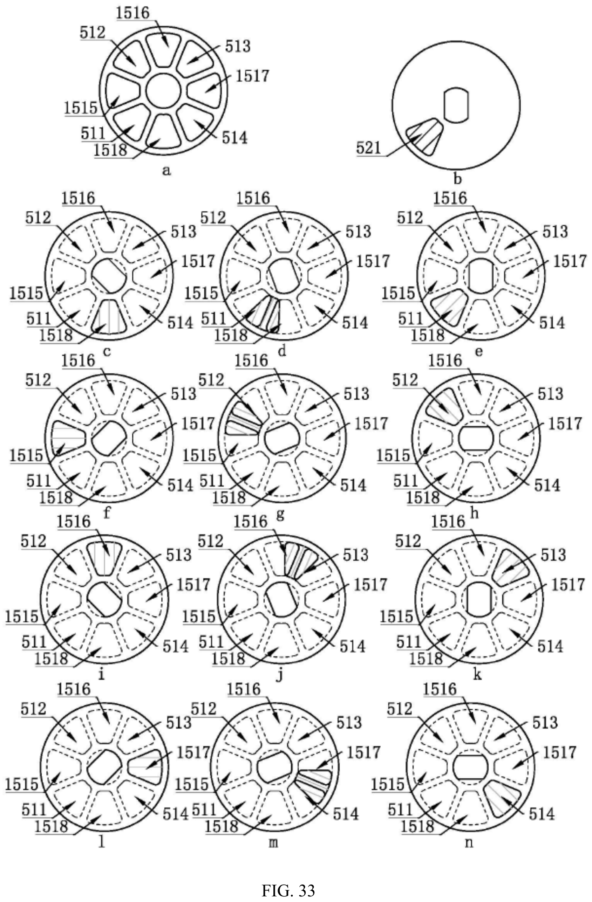

Embodiment 18: Referring to FIGS. 32 to 33, a fluid control vale is provided, which is an octisectional five-way (one in and four outs) valve having a closing function, adjustable valve core opening and a single-output function. In Embodiment 18, the input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515, a sixth blind hole 1516, a seventh blind hole 1517 and an eighth blind hole 1518. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521 which communicates with the first input port 21, as shown in FIG.33 a to b. The fixed valve plate 51 and the movable valve plate 52 have the following cooperation relationship: As shown in FIG.33 c to n, the first flow guide hole 521 aligns with the eighth blind hole 1518 and then is closed by the eighth blind hole 1518, and this means that the valve is in a closed state. Or, the first flow guide hole 521 partially aligns with the eighth blind hole 1518 and the first through hole 511 and then communicates with the first through hole 511, and this means that the valve is in a state of opening and flow adjustment for the first output port 31. Or, the first flow guide hole 521 aligns with the first through hole 511 and then communicates with the first through hole 511, and this means that the valve is in a state of the first output port 31 being open. Or, the first flow guide hole 521 aligns with the fifth blind hole 1515 and then is closed by the fifth blind hole 1515, and this means that the valve is in a closed state. Or, the first flow guide hole 521 partially aligns with the fifth blind hole 1515 and the second through hole 512 and then communicates with the second through hole 512, and this means that the valve is in a state of opening and flow adjustment for the second output port 32. Or, the first flow guide hole 521 aligns with the second through hole 512 and then communicates with the second through hole 512, and this means that the valve is in a state of the second output port 32 being open. Or, the first flow guide hole 521 aligns with the sixth blind hole 1516 and then is closed by the sixth blind hole 1516, and this means that the valve is in a closed state. Or, the first flow guide hole 521 partially aligns with the sixth blind hole 1516 and the third through hole 513 and then communicates with the third through hole 513, and this means that the valve is in a state of opening and flow adjustment for the third output port 33. Or, the first flow guide hole 521 aligns with the third through hole 513 and then communicates with the third through hole 513, and this means that the valve is in a state of the third output port 33 being open. Or, the first flow guide hole 521 aligns with the seventh blind hole 1517 and then is closed by the seventh blind hole 1517, and this means that the valve is in a closed state. Or, the first flow guide hole 521 aligns with the seventh blind hole 1517 and then is closed by the seventh blind hole 1517 and aligns with the fourth through hole 514 and then communicates with the fourth through hole 514, and this means that the valve is in a state of opening and flow adjustment for the fourth output port 34. Or, the first flow guide hole 521 aligns with the fourth through hole 514 and then communicates with the fourth through hole 514, and this means that the valve is in a state of the fourth output port 34 being open.

In Embodiment 18, the fifth blind hole 1515, the sixth blind hole 1516, the seventh blind hole 1517 and the eighth blind hole 1518 are each formed by a blind hole structure directly formed on the fixed valve plate 51, or are each a combination of a through hole formed in the fixed valve plate 51 and a closed cavity 6 formed in the valve seat body 4.

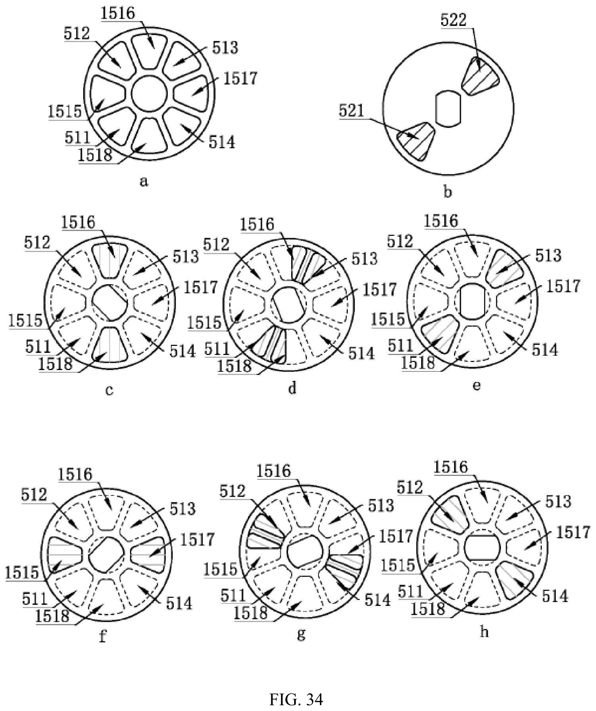

Embodiment 19: Referring to FIG. 34, a fluid control valve is provided, which is an octisectional five-way (one in and four outs) valve having a closing function, adjustable valve core opening and a diagonal dual-output function. In Embodiment 19, the structure of the valve body 1 is the same as that in Embodiment 18. The input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515, a sixth blind hole 1516, a seventh blind hole 1517 and an eighth blind hole 1518. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521 and a second flow guide hole 522 which communicate with the first input port 21, as shown in FIG.34 a to b. The fixed valve plate 51 and the movable valve plate 52 have the following cooperation relationship: As shown in FIG34. c to n, the first flow guide hole 521 aligns with the eighth blind hole 1518 and then is closed by the eighth blind hole 1518, and the second flow guide hole 522 aligns with the sixth blind hole 1516 and then is closed by the sixth blind hole 1516, and this means that the valve is in a closed state. Or, the first flow guide hole 521 partially aligns with the eighth blind hole 1518 and the first through hole 511 and then communicates with the first through hole 511, and the second flow guide hole 522 partially aligns with the sixth blind hole 1516 and the third through hole 513 and then communicates with the third through hole 513, and this means that the valve is in a state of opening and flow adjustment for the first output port 31 and the third output port 33. Or, the first flow guide hole 521 aligns with the first through hole 511 and then communicates with the first through hole 511, and the second flow guide hole 522 aligns with the third through hole 513 and then communicates with the third through hole 513, and this means that the valve is in a state of the first output port 31 and the third output port 33 being open. Or, the first flow guide hole 521 aligns with the fifth blind hole 1515 and then is closed by the fifth blind hole 1515, and the second flow guide hole 522 aligns with the seventh blind hole 1517 and then is closed by the seventh blind hole 1517, and this means that the valve is in a closed state. Or, the first flow guide hole 521 partially aligns with the fifth blind hole 1515 and the second through hole 512 and then communicates with the second through hole 512, and the second flow guide hole 522 partially aligns with the seventh blind hole 1517 and the fourth through hole 514 and then communicates with the fourth through hole 514, and this means that the valve is in a state of opening and flow adjustment for the second output port 32 and the fourth output port 34. Or, the first flow guide hole 521 aligns with the second through hole 512 and then communicates with the second through hole 512, and the second flow guide hole 522 aligns with the fourth through hole 514 and communicates with the fourth through hole 514, and this means that the valve is in a state of the second output port 32 and the fourth output port 34 being open.

In Embodiment 19, the fifth blind hole 1515, the sixth blind hole 1516, the seventh blind hole 1517 and the eighth blind hole 1518 are each formed by a blind hole structure directly formed on the fixed valve plate 51, or are each a combination of a through hole formed in the fixed valve plate 51 and a closed cavity 6 formed in the valve seat body 4.

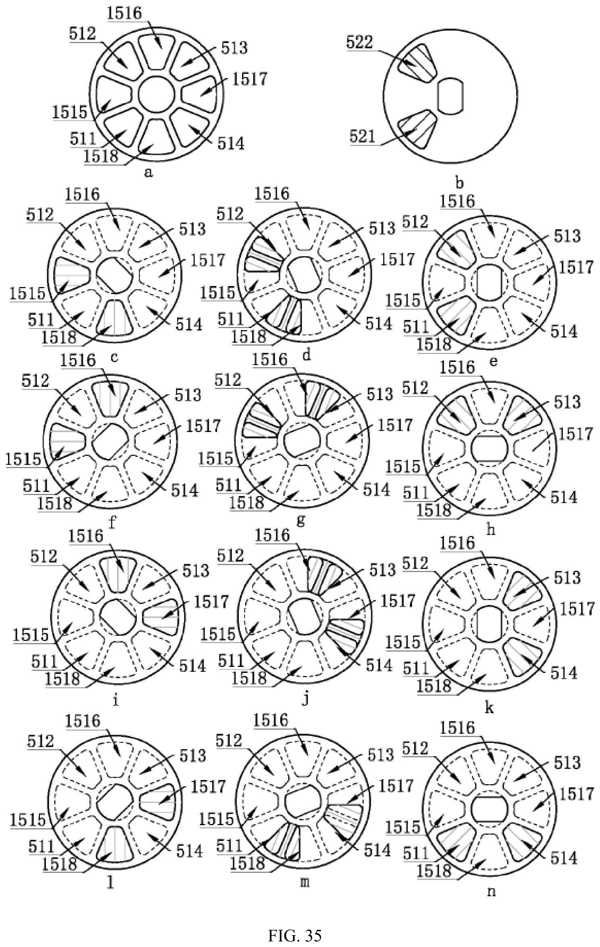

Embodiment 20: Referring to FIG. 35, a fluid control vale is provided, which is an octisectional five-way (one in and four outs) valve having a closing function, adjustable valve core opening and a same-side dual-output function. In Embodiment 20, the structure of the valve body 1 is the same as that in Embodiment 18. The input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515, a sixth blind hole 1516, a seventh blind hole 1517 and an eighth blind hole 1518. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521 and a second flow guide hole 522 which communicate with the first input port 21, as shown in FIG.35 a to b. The fixed valve plate 51 and the movable valve plate 52 have the following cooperation relationship: As shown in FIG.35 c to n, the first flow guide hole 521 aligns with the eighth blind hole 1518 and then is closed by the eighth blind hole 1518, and the second flow guide hole 522 aligns with the fifth blind hole 1515 and then is closed by the fifth blind hole 1515, and this means that the valve is in a closed state. Or, the first flow guide hole 521 partially aligns with the eighth blind hole 1518 and the first through hole 511 and then communicates with the first through hole 511, and the second flow guide hole 522 partially aligns with the fifth blind hole 1515 and the second through hole 512 and then communicates with the second through hole 512, and this means that the valve is in a state of opening and flow adjustment for the first output port 31 and the second output port 32. Or, the first flow guide hole 521 aligns with the first through hole 511 and then communicates with the first through hole 511, and the second flow guide hole 522 aligns with the second through hole 512 and then communicates with the second through hole 512, and this means that the valve is in a state of the first output port 31 and the second output port 32 being open. Or, the first flow guide hole 521 aligns with the fifth blind hole 1515 and then is closed by the fifth blind hole 1515, and the second flow guide hole 522 aligns with the sixth blind hole 1516 and then is closed by the sixth blind hole 1516, and this means that the valve is in a closed state. Or, the first flow guide hole 521 partially aligns with the fifth blind hole 1515 and the second through hole 512 and then communicates with the second through hole 512, and the second flow guide hole 522 partially aligns with the sixth blind hole 1516 and the third through hole 513 and then communicates with the third through hole 513, and this means that the valve is in a state of opening and flow adjustment for the second output port 32 and the third output port 33. Or, the first flow guide hole 521 aligns with the second through hole 512 and then communicates with the second through hole 512, and the second flow guide hole 522 aligns with the third through hole 513 and then communicates with the third through hole 513, and this means that the valve is in a state of the second output port 32 and the third output port 33 being open. Or, the first flow guide hole 521 aligns with the sixth blind hole 1516 and then is closed by the sixth blind hole 1516, and the second flow guide hole 522 aligns with the seventh blind hole 1517 and then is closed by the seventh blind hole 1517, and this means that the valve is in a closed state. Or, the first flow guide hole 521 partially aligns with the sixth blind hole 1516 and the third through hole 513 and then communicates with the third through hole 513, and the second flow guide hole 522 partially aligns with the seventh blind hole 1517 and the fourth through hole 514 and then communicates with the fourth through hole 514, and this means that the valve is in a state of simultaneous opening and flow adjustment for the third output port 33 and the fourth output port 34. Or, the first flow guide hole 521 aligns with the third through hole 513 and then communicates with the third through hole 513, and the second flow guide hole 522 aligns with the fourth through hole 514 and then communicates with the fourth through hole 514, and this means that the valve is in a state of the third output port 33 and the fourth output port 34 being open. Compared with Embodiment 19, this embodiment provides the function of opening and flow adjustment for any two adjacent output ports 31.

In Embodiment 20, the fifth blind hole 1515, the sixth blind hole 1516, the seventh blind hole 1517 and the eighth blind hole 1518 are each formed by a blind hole structure directly formed on the fixed valve plate 51, or are each a combination of a through hole formed in the fixed valve plate 51 and a closed cavity 6 formed in the valve seat body 4.

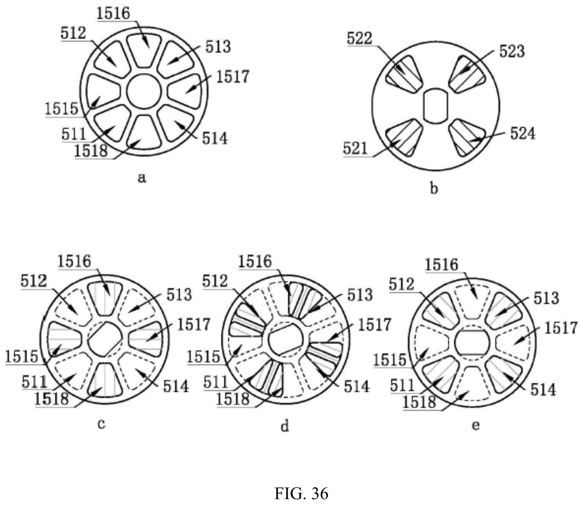

Embodiment 21: Referring to FIG. 36, a fluid control valve is provided, which is an octisectional five-way (one in and four outs) valve having a closing function, adjustable valve core opening and a simultaneous four-output and adjustment function. In Embodiment 21, the structure of the valve body 1 is the same as that in Embodiment 18. The input port 2 of the valve body 1 includes a first input port 21, and the output ports 3 include a first output port 31, a second output port 32, a third output port 33 and a fourth output port 34. The fixed valve plate 51 is provided with a first through hole 511, a second through hole 512, a third through hole 513, a fourth through hole 514, a fifth blind hole 1515, a sixth blind hole 1516, a seventh blind hole 1517 and an eighth blind hole 1518. The first through hole 511, the second through hole 512, the third through hole 513 and the fourth through hole 514 respectively communicate with the first output port 31, the second output port 32, the third output port 33 and the fourth output port 34. The movable valve plate 52 is provided with a first flow guide hole 521, a second flow guide hole 522, a third flow guide hole 523 and a fourth flow guide hole 524 which communicate with the first input port 21, as shown in FIG.36 a to b. The fixed valve plate 51 and the movable valve plate 52 have the following cooperation relationship: As shown in FIG.36 c to e, the first flow guide hole 521 aligns with the eighth blind hole 1518 and then is closed by the eighth blind hole 1518, the second flow guide hole 522 aligns with the fifth blind hole 1515 and then is closed by the fifth blind hole 1515, the third flow guide hole 523 aligns with the sixth blind hole 1516 and then is closed by the sixth blind hole 1516, and the fourth flow guide hole 524 aligns with the seventh blind hole 1517 and then is closed by the seventh blind hole 1517, and this means that the valve is in a closed state. Or, the first flow guide hole 521 partially aligns with the eighth blind hole 1518 and the first through hole 511 and then communicates with the first through hole 511, the second flow guide hole 522 partially aligns with the fifth blind hole 1515 and the second through hole 512 and then communicates with the second through hole 512, the third flow guide hole 523 partially aligns with the sixth blind hole 1516 and the third through hole 513 and then communicates with the third through hole 513, and the fourth flow guide hole 524 partially aligns with the seventh blind hole 1517 and the fourth through hole 514 and then communicates with the fourth through hole 514, and this means that the valve is in a state of opening and flow adjustment for the first output port 31, the second output port 32, the third output port 33 and the fourth output port 34. Or, the first flow guide hole 521 aligns with the first through hole 511 and then communicates with the first through hole 511, the second flow guide hole 522 aligns with the second through hole 512 and then communicates with the second through hole 512, the third flow guide hole 523 aligns with the third through hole 513 and then communicates with the third through hole 513, and the fourth flow guide hole 524 aligns with the fourth through hole 514 and then communicates with the fourth through hole 514, and this means that the valve is in a state of the first output port 31, the second output port 32, the third output port 33 and the fourth output port 34 being open.

In Embodiment 21, the fifth blind hole 1515, the sixth blind hole 1516, the seventh blind hole 1517 and the eighth blind hole 1518 are each formed by a blind hole structure directly formed on the fixed valve plate 51, or are each a combination of a through hole formed in the fixed valve plate 51 and a closed cavity 6 formed in the valve seat body 4.

To sum up, the fluid control valve usable for irrigation in this embodiment adopts a design of configuring a straight flow channel in the valve seat body 4, which can effectively reduce the resistance to the fluid during operation.

The above are only preferred embodiments of the present disclosure, and the specific solutions of bisectinonal, trisectional, quadrisectional, quinsectional, sextisectional and octisectional fluid control valves are preferred. The scope of the present disclosure is not limited to the above embodiments, and any factual solutions of fluid control valves with other equal divisions, derived from the concept of the present invention, are within the scope of the present disclosure. It should be noted that those of ordinary skill in the art can make several improvements and embellishments without departing from the principle of the present disclosure. These improvements and embellishments should also be regarded as falling within the scope of protection of the present disclosure.

## Claims

1. A fluid control valve usable for irrigation, comprising:
a valve body (1) having at least one input port (2), at least one output port (3) and a valve seat body (4) which is provided therein with a straight flow channel, wherein the input port (2) and the output port (3) are respectively arranged at two ends of the straight flow channel and communicate with each other by means of the straight flow channel; and
a valve core assembly (5) arranged in the valve seat body (4) and located in the straight flow channel to control the straight flow channel to connect the input port (2) and the output port (3) or close the input port (2) and the output port (3).

2. The fluid control valve usable for irrigation according to claim 1, wherein the valve core assembly (5) comprises:
a fixed valve plate (51) fixedly mounted in the valve seat body (4), located in the straight flow channel, and at least provided with a through hole; and
a movable valve plate (52) rotatably arranged on the fixed valve plate (51) and at least provided with a flow guide hole, the movable valve plate (52) rotating in a manner of fitting closely against the fixed valve plate (51) to control the straight flow channel to connect the input port and the output port when the flow guide hole aligns with the through hole in the fixed valve plate, or to disconnect the input port from the output port when the flow guide hole does not align with the through hole in the fixed valve plate.

3. The fluid control valve usable for irrigation according to claim 2, wherein the movable valve plate (52) is located at an end, facing the input port (2), of the fixed valve plate (51).

4. The fluid control valve usable for irrigation according to claim 2 or 3, wherein the fixed valve plate (51) is further provided with a blind hole, and closing of the straight flow channel is controlled by alignment of the blind hole with the flow guide hole.

5. The fluid control valve usable for irrigation according to claim 4, wherein the blind hole is formed by a blind hole structure directly formed on the fixed valve plate (51), or is a combination of a through hole formed in the fixed valve plate (51) and a closed cavity (6) formed in the valve seat body (4).

6. The fluid control valve usable for irrigation according to claim 2 or 3, wherein the output port (3) is arranged at an upper end of the valve seat body (4), the input port (2) is arranged at a lower end of the valve seat body (4), and a lower end of a control valve stem is inserted into the valve seat body (4) from top to bottom, and extends through the fixed valve plate (51) to be connected to the movable valve plate (52).

7. The fluid control valve usable for irrigation according to claim 2 or 3, wherein the input port (2) comprises a first input port (21), the output port (3) comprises a first output port (31), the fixed valve plate (51) is provided with a first through hole (511) and a second blind hole (1512), the first through hole (511) communicates with the first output port (31), the movable valve plate (52) is provided with a first flow guide hole (521) which communicates with the first input port (21), and the fixed valve plate (51) and the movable valve plate (52) have the following cooperation relationship: the first flow guide hole (521) aligns with the first through hole (511) and then communicates with the first through hole (511); or, the first flow guide hole (521) aligns with the second blind hole (1512) and then is closed by the second blind hole (1512); or, the first flow guide hole (521) partially aligns with the first through hole (511) and then communicates with the first through hole (511).

8. The fluid control valve usable for irrigation according to claim 7, wherein the second blind hole (1512) is formed by a blind hole structure directly formed on the fixed valve plate (51), or is a combination of a through hole formed in the fixed valve plate (51) and a closed cavity (6) formed in the valve seat body (4).

9. The fluid control valve usable for irrigation according to claim 2 or 3, wherein the input port (2) comprises a first input port (21), the output ports (3) comprise a first output port (31) and a second output port (32), the fixed valve plate (51) is provided with a first through hole (511), a second through hole (512) and a third blind hole (1513), the first through hole (511) and the second through hole (512) respectively communicate with the first output port (31) and the second output port (32), the movable valve plate (52) is provided with a first flow guide hole (521) which communicates with the first input port (21), and the fixed valve plate (51) and the movable valve plate (52) have the following cooperation relationship: the first flow guide hole (521) aligns with the first through hole (511) and then communicates with the first through hole (511); or, the first flow guide hole (521) partially aligns with the first through hole (511) and the third blind hole (1513) and then communicates with the first through hole (511); or, the first flow guide hole (521) aligns with the second through hole (512) and then communicates with the second through hole (521); or, the first flow guide hole (521) partially aligns with the second through hole (512) and the third blind hole (1513) and then communicates with the second through hole (512); or, the first flow guide hole (521) aligns with the third blind hole (1513) and then is closed by the third blind hole (1513).

10. The fluid control valve usable for irrigation according to claim 9, wherein the third blind hole (1513) is formed by a blind hole structure directly formed on the fixed valve plate (51), or is a combination of a through hole formed in the fixed valve plate (51) and a closed cavity (6) formed in the valve seat body (4).

11. The fluid control valve usable for irrigation according to claim 2 or 3, wherein the input port (2) comprises a first input port (21), the output ports (3) comprise a first output port (31) and a second output port (32), the fixed valve plate (51) is provided with a first through hole (511), a second through hole (511) and a third blind hole (1513), the first through hole (511) and the second through hole (512) respectively communicate with the first output port (31) and the second output port (32), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the first through hole (511) and then communicates with the first through hole (511), and the second flow guide hole (522) aligns with the second through hole (512) and then communicates with the second through hole (512); or, the first flow guide hole (521) aligns with the second through hole (512) and then communicates with the second through hole (512), and the second flow guide hole (522) aligns with the third blind hole (1513) and then is closed by the third blind hole (1513); or, the first flow guide hole (521) aligns with the third blind hole (1513) and then is closed by the third blind hole (1513), and the second flow guide hole (522) aligns with the first through hole (511) and then communicates with the first through hole (511).

12. The fluid control valve usable for irrigation according to claim 11, wherein the third blind hole (1513) is formed by a blind hole structure directly formed on the fixed valve plate (51), or is a combination of a through hole formed in the fixed valve plate (51) and a closed cavity (6) formed in the valve seat body (4).

13. The fluid control valve usable for irrigation according to claim 2 or 3, wherein the input port (2) comprises a first input port (21), the output ports (3) comprise a first output port (31), a second output port (32) and a third output port (33), the fixed valve plate (51) is provided with a first through hole (511), a second through hole (512) and a third through hole (513) which respectively communicate with the first output port (31), the second output port (32) and the third output port (33), the movable valve plate (52) is provided with a first flow guide hole (521) which communicates with the first input port (21), and the fixed valve plate (51) and the movable valve plate (52) have the following cooperation relationship: the first flow guide hole (521) aligns with the first through hole (511) and then communicates with the first through hole (511); or, the first flow guide hole (521) aligns with the second through hole (512) and then communicates with the second through hole (512); or, the first flow guide hole (521) aligns with the third through hole (513) and then communicates with the third through hole (513).

14. The fluid control valve usable for irrigation according to claim 13, wherein the input port (2) comprises a first input port (21), the output port (3) comprises a first output port (31), the fixed valve plate (51) is provided with a first through hole (511), a second through hole (512), a third blind hole (1513) and a fourth blind hole (1514), the first through hole (511) and the second through hole (512) communicate with the first output port (31), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the first through hole (511) and then communicate with the first through hole (511), and the second flow guide hole (522) aligns with the second through hole (512) and then communicates with the second through hole (512); or, the first flow guide hole (521) aligns with the third blind hole (1513) and then is closed by the third blind hole (1513), and the second flow guide hole (522) aligns with the fourth blind hole (1514) and then is closed by the fourth blind hole (1514); or, the first flow guide hole (521) partially aligns with the first through hole (511) and the third blind hole (1513) and then communicates with the first through hole (511), and the second flow guide hole (522) partially aligns with the second through hole (512) and the fourth blind hole (1514) and then communicates with the second through hole (512).

15. The fluid control valve usable for irrigation according to claim 2 or 3, wherein the input port (2) comprises a first input port (21), the output ports (3) comprise a first output port (31) and a second output port (32), the fixed valve plate (51) is provided with a first through hole (511), a second through hole (512), a third blind hole (1513) and a fourth blind hole (1514), the first through hole (511) and the second through hole (512) respectively communicate with the first output port (31) and the second output port (32), the movable valve plate (51) is provided with a first flow guide hole (521) which communicates with the first input port (21), and the fixed valve plate (51) and the movable valve plate have (51) the following cooperation relationship: the first flow guide hole (521) aligns with the fourth blind hole (1514) and then is closed by the fourth blind hole (1514); or, the first flow guide hole (521) partially aligns with the first through hole (511) and the fourth blind hole (1514) and then communicates with the first through hole (511); or, the first flow guide hole (521) aligns with the first through hole (511) and then communicates with the first through hole (511); or, the first flow guide hole (521) aligns with the third blind hole (1513) and then is closed by the third blind hole (1513); or, the first flow guide hole (521) partially aligns with the second through hole (512) and the third blind hole (1513) and then communicates with the second through hole (512); or, the first flow guide hole (521) aligns with the second through hole (512) and then communicates with the second through hole (512).

16. The fluid control valve usable for irrigation according to claim 15, wherein the third blind hole (1513) and the fourth blind hole (1514) are each formed by a blind hole structure directly formed on the fixed valve plate (51), or are each a combination of a through hole formed in the fixed valve plate (51) and a closed cavity (6) formed in the valve seat body (4).

17. The fluid control valve usable for irrigation according to claim 2 or 3, wherein the input port (2) comprises a first input port (21), the output ports (3) comprise a first output port (31) and a second output port (32), the fixed valve plate (51) is provided with a first through hole (511), a second through hole (512), a third blind hole (1513) and a fourth blind hole (1514), the first through hole (511) and the second through hole (512) respectively communicate with the first output port (31) and the second output port (32), the movable valve plate (51) is provided with a first flow guide hole (521) and a second flow guide hole (522) which communicate with the first input port (21), and the fixed valve plate (51) and the movable valve plate (51) have the following cooperation relationship: the first flow guide hole (521) aligns with the fourth blind hole (1514) and then is closed by the fourth blind hole (1514), and the second flow guide (522) hole aligns with the third blind hole (1513) and then is closed by the third blind hole (1513); or, the first flow guide hole (521) partially aligns with the first through hole (511) and the fourth blind hole (1514) and then communicates with the first through hole (511), and the second flow guide hole (521) partially aligns with the third blind hole (1513) and the second through hole (512) and then communicates with the second through hole (521); or, the first flow guide hole (521) aligns with the first through hole (511) and then communicates with the first through hole (511), and the second flow guide hole (522) aligns with the second through hole (512) and then communicates with the second through hole (512).

18. The fluid control valve usable for irrigation according to claim 17, wherein the third blind hole (1513) and the fourth blind hole (1514) are each formed by a blind hole structure directly formed on the fixed valve plate (51), or are each a combination of a through hole formed in the fixed valve plate (51) and a closed cavity (6) formed in the valve seat body (4).

19. The fluid control valve usable for irrigation according to claim 2 or 3, wherein the input port (2) comprises a first input port (21), the output ports (3) comprise a first output port (31) and a second output port (32), the fixed valve plate (51) is provided with a first through hole (511), a second through hole (512), a third blind hole (1513), a fourth blind hole (1514) and a fifth blind hole (1515), the first through hole (511) and the second through hole (512) respectively communicate with the first output port (31) and the second output port (32), the movable valve plate (51) is provided with a first flow guide hole (521) which communicates with the first input port (21), and the fixed valve plate (51) and the movable valve plate (51) have the following cooperation relationship: the first flow guide hole (521) partially aligns with the first through hole (511) and the fifth blind hole (1515) and then communicates with the first through hole (511); or, the first flow guide hole (521) aligns with the first through hole (511) and then communicates with the first through hole (511); or, the first flow guide hole (521) aligns with the fifth blind hole (1515) and then is closed by the fifth blind hole (1515); or, the first flow guide hole (521) partially aligns with the second through hole (512) and the fifth blind hole (1515) and then communicates with the second through hole (512); or, the first flow guide hole (521) aligns with the second through hole (512) and then communicates with the second through hole (512).

20. The fluid control valve usable for irrigation according to claim 19, wherein the third blind hole (1513), the fourth blind hole (1514) and the fifth blind hole (1515) are each formed by a blind hole structure directly formed on the fixed valve plate (51); alternatively, the third blind hole (1513) and the fourth blind hole (1514) are each formed by a blind hole structure directly formed on the fixed valve plate (51), and the fifth blind hole (1515) is a combination of a through hole formed in the fixed valve plate (51) and a closed cavity (6) formed in the valve seat body (4).

21. The fluid control valve usable for irrigation according to claim 2 or 3, wherein the input port (2) comprises a first input port (21), the output ports (3) comprise a first output port (31), a second output port (32) and a third output port (33), the fixed valve plate (51) is provided with a first through hole (511), a second through hole (512), a third through hole (513), a fourth blind hole (1514) and a fifth blind hole (1515), the first through hole (511), the second through hole (512) and the third through hole (513) respectively communicate the first output port (31), the second output port (32) and the third output port (33), the movable valve plate (52) is provided with a first flow guide hole (521 which communicates with the first input port (21), and the fixed valve plate (51) and the movable valve plate (52) have the following cooperation relationship: the first flow guide hole (521) aligns with the fourth blind hole (1514) and then is closed by the fourth blind hole (1514); or, the first flow guide hole (521) partially aligns with the first through hole (511) and the fourth blind hole (1514) and then communicates with the first through hole (511); or, the first flow guide hole (521) aligns with the first through hole (511) and then communicates with the first through hole (511); or, the first flow guide hole (521) aligns with the second through hole (512) and then communicates with the second through hole (512); or, the first flow guide hole (521) partially aligns with the second through hole (512) and the fifth blind hole (1515) and then communicates with the second through hole (512); or, the first flow guide hole (521) aligns with the third through hole (513) and then communicates with the third through hole (513); or, the first flow guide hole (521) partially aligns with the fifth blind hole (1515) and the third through hole (513) and then communicates with the third through hole (513); or, the first flow guide hole (521) aligns with the fifth blind hole (1515) and then is closed by the fifth blind hole (1515).

22. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514) and a fifth blind hole (1515), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) which communicates with the first input port (21), and the fixed valve plate (51) and the movable valve plate (52) have the following cooperation relationship: the first flow guide hole (521) aligns with the fifth blind hole (1515) and then is closed by the fifth blind hole (1515); or, the first flow guide hole (521) partially aligns with the first through hole (511) and the fifth blind hole (1515) and then communicates with the first through hole (511); or, the first flow guide hole (521) aligns with the first through hole (511) and then communicates with the first through hole (511); or, the first flow guide hole (521) aligns with the second through hole (512) and then communicates with the second through hole (521); or, the first flow guide hole (521) aligns with the third through hole (513) and then communicates the third through hole (513); or, the first flow guide hole (521) aligns with the fourth through hole (514) and then communicates with the fourth through hole (514); or, the first flow guide hole (521) partially aligns with the fourth through hole (514) and the fifth blind hole (1515) and then communicates with the fourth through hole (514).

23. The fluid control valve usable for irrigation according to claim 22, wherein the fifth blind hole (1515) is formed by a blind hole structure directly formed on the fixed valve plate (51), or is a combination of a through hole formed in the fixed valve plate (51) and a closed cavity (6) formed in the valve seat body (4).

24. The fluid control valve usable for irrigation according to claim 2 or 3, wherein the input port (2) comprises a first input port (21), the output ports (3) comprise a first output port (31) and a second output port (32), the fixed valve plate (51) is provided with a first through hole (511), a second through hole (512), a third blind hole (1513), a fourth blind hole (1514), a fifth blind hole (1515) and a sixth blind hole (1516), the first through hole (511) and the second through hole (512) respectively communicate with the first output port (31) and the second output port (32), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the fourth blind hole (1514) and is closed, and the second flow guide hole (522) aligns with the fifth blind hole (1515) and the sixth blind hole (1516) and is closed; or, the first flow guide hole (521) partially aligns with the fourth blind hole (1514) and the second through hole (512) and then communicates with the second through hole (512), and the second flow guide hole (522) aligns with the sixth blind hole (1516) and partially aligns with the first through hole (511) and the fifth blind hole (1515) and then communicates with the first through hole (511); or, the first flow guide hole (521) aligns with the second through hole (512) and then communicates with the second through hole (512), and the second flow guide hole (522) aligns with the first through hole (511) and the sixth blind hole (1516) and then communicates with the first through hole (511); or, the first flow guide hole (521) aligns with the fifth blind hole (1515) and then is closed by the fifth blind hole (1515), and the second flow guide hole (522) aligns with the first through hole (511) and the third blind hole (1513) and then communicates with the first through hole (511); or, the first flow guide hole (521) partially aligns with the fifth blind hole (1515) and the sixth blind hole (1516) and then is closed by the sixth blind hole (1516), and the second flow guide hole (522) partially aligns with the first through hole (511) and the fourth blind hole (1514) and aligns with the third blind hole (1513) and then communicates with the first through hole (511); or, the first flow guide hole (521) aligns with the third blind hole (1513) and then is closed by the third blind hole (1513), and the second flow guide hole (522) aligns with the second through hole (512) and the fifth blind hole (1515) and then communicates with the second through hole (512); or, the first flow guide hole (521) partially aligns with the third blind hole (1513) and the fourth blind hole (1514) and then is closed by the fourth blind hole (1514), and the second flow guide hole (522) partially aligns with the second through hole (512) and the sixth blind hole (1516) and aligns with the fifth blind hole (1515) and then communicates with the second through hole (512).

25. The fluid control valve usable for irrigation according to claim 24, wherein the third blind hole (1513), the fourth blind hole (1514), the fifth blind hole (1515) and the sixth blind hole (1516) are each formed by a blind hole structure directly formed on the fixed valve plate (51), or are each a combination of a through hole formed in the fixed valve plate (51) and a closed cavity (6) formed in the valve seat body (4).

26. The fluid control valve usable for irrigation according to claim 2 or 3, wherein the input port (2) comprises a first input port (21), the output ports (3) comprise a first output port (31), a second output port (32) and a third output port (33), the fixed valve plate (51) is provided with a first through hole (511), a second through hole (512), a third through hole (513), a fourth blind hole (1514), a fifth blind hole 1515 and a sixth blind hole (1516), the first through hole (511), the second through hole (512) and the third through hole (513) respectively communicate with the first output port (31), the second output port (32) and the third output port (33), the movable valve plate (52) is provided with a first flow guide hole (521) which communicates with the first input port (21), and the fixed valve plate (51) and the movable valve plate (52) have the following cooperation relationship: the first flow guide hole (521) aligns with the sixth blind hole (1516) and then is closed by the sixth blind hole (1516); or, the first flow guide hole (521) partially aligns with the first through hole (511) and the sixth blind hole (1516) and then communicates with the first through hole (511); or, the first flow guide hole (521) aligns with the first through hole (511) and then communicates with the first through hole (511); or, the first flow guide hole (521) aligns with the fourth blind hole (1514) and then is closed by the fourth blind hole (1514); or, the first flow guide hole (521) partially aligns with the second through hole (512) and the fourth blind hole (1514) and then communicates with the second through hole (512); or, the first flow guide hole (521) aligns with the second through hole (512) and then communicates with the second through hole (512); or, the first flow guide hole (521) aligns with the fifth blind hole (1515) and then is closed by the fifth blind hole (1515); or, the first flow guide hole (521) partially aligns with the third through hole (513) and the fifth blind hole (1515) and then communicates with the third through hole (513); or, the first flow guide hole (521) aligns with the third through hole (513) and then communicates with the third through hole (513).

27. The fluid control valve usable for irrigation according to claim 26, wherein the fourth blind hole (1514), the fifth blind hole (1515) and the sixth blind hole (1516) are each formed by a blind hole structure directly formed on the fixed valve plate (51), or are each a combination of a through hole formed in the fixed valve plate (51) and a closed cavity (6) formed in the valve seat body (4).

28. The fluid control valve usable for irrigation according to claim 2 or 3, wherein the input port (2) comprises a first input port (21), the output ports (3) comprise a first output port (31), a second output port (32) and a third output port (33), the fixed valve plate is provided with a first through hole (511), a second through hole (512), a third through hole (513), a fourth blind hole (1514), a fifth blind hole (1515) and a sixth blind hole (1516), the first through hole (511), the second through hole (512) and the third through hole (513) respectively communicate with the first output port (31), the second output port (32) and the third output port (33), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the sixth blind hole (1516) and then is closed by the sixth blind hole (1516), and the second flow guide hole (522) aligns with the fourth blind hole (1514) and then is closed by the fourth blind hole (1514); or, the first flow guide hole (521) partially aligns with the first through hole (511) and the sixth blind hole (1516) and then communicates with the first through hole (511), and the second flow guide hole (522) partially aligns with the fourth blind hole (1514) and the second through hole (512) and then communicates with the second through hole (512); or, the first flow guide hole (521) aligns with the first through hole (511) and then communicates with the first through hole (511), and the second flow guide hole (522) aligns with the second through hole (512) and then communicates with the second through hole (512); or, the first flow guide hole (521) aligns with the fourth blind hole (1514) and then is closed by the fourth blind hole (1514), and the second flow guide hole (522) aligns with the fifth blind hole (1515) and then is closed by the fifth blind hole (1515); or, the first flow guide hole (521) partially aligns with the second through hole (512) and the fourth blind hole (1514) and then communicates with the second through hole (512), and the second flow guide hole (522) partially aligns with the fifth blind hole (1515) and the third through hole (513) and then communicates with the third through hole (513); or, the first flow guide hole (521) aligns with the second through hole (512) and then communicates with the second through hole (512), and the second flow guide hole (522) aligns with the third through hole (513) and then communicates with the third through hole (513); or, the first flow guide hole (521) aligns with the fifth blind hole (1515) and then is closed by the fifth blind hole (1515), and the second flow guide hole (522) aligns with the sixth blind hole (1516) and then is closed by the sixth blind hole (1516); or, the first flow guide hole (521) partially aligns with the third through hole (513) and the fifth blind hole (1515) and then communicates with the third through hole (513), and the second flow guide hole (522) partially aligns with the sixth blind hole (1516) and the first through hole (511) and then communicates with the first through hole (511); or, the first flow guide hole (521) aligns with the third through hole (513) and then communicates with the third through hole (513), and the second flow guide hole (522) aligns with the first through hole (511) and then communicates with the first through hole (511).

29. The fluid control valve usable for irrigation according to claim 28, wherein the fourth blind hole (1514), the fifth blind hole (1515) and the sixth blind hole (1516) are each formed by a blind hole structure directly formed on the fixed valve plate (51), or are each a combination of a through hole formed in the fixed valve plate (51) and a closed cavity (6) formed in the valve seat body (4).

30. The fluid control valve usable for irrigation according to claim 2 or 3, wherein the input port (2) comprises a first input port (21), the output ports (3) comprise a first output port (31), a second output port (32) and a third output port (33), the fixed valve plate (51) is provided with a first through hole (511), a second through hole (512), a third through hole (513), a fourth blind hole (1514), a fifth blind hole (1515) and a sixth blind hole (1516), the first through hole (511), the second through hole (512) and the third through hole (513) respectively communicate with the first output port (31), the second output port (32) and the third output port (33), the movable valve plate (52) is provided with a first flow guide hole (521), a second flow guide hole (522) and a third flow guide hole (523) which communicate with the first input port (21), and the fixed valve plate (51) and the movable valve plate (52) have the following cooperation relationship: the first flow guide hole (521) aligns with the sixth blind hole (1516) and then is closed by the sixth blind hole (1516), the second flow guide hole (522) aligns with the fourth blind hole (1514) and then is closed by the fourth blind hole (1514), and the third flow guide hole (523) aligns with the fifth blind hole (1515) and then is closed by the fifth blind hole (1515); or, the first flow guide hole (521) partially aligns with the first through hole (511) and the sixth blind hole (1516) and then communicate with the first through hole (511), the second flow guide hole (522) partially aligns with the fourth blind hole (1514) and the second through hole (512) and then communicates with the second through hole (512), and the third flow guide hole (523) partially aligns with the fifth blind hole (1515) and the third through hole (513) and then communicates with the third through hole (513); or, the first flow guide hole (521) aligns with the first through hole (511) and then communicates with the first through hole (511), the second flow guide hole (522) aligns with the second through hole (512) and then communicates with the second through hole (512), and the third flow guide hole (523) aligns with the third through hole (513) and then communicates with the third through hole (513).

31. The fluid control valve usable for irrigation according to claim 30, wherein the fourth blind hole (1514), the fifth blind hole (1515) and the sixth blind hole (1516) are each formed by a blind hole structure directly formed on the fixed valve plate (51), or are each a combination of a through hole formed in the fixed valve plate (51) and a closed cavity (6) formed in the valve seat body (4).

32. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515) and a sixth blind hole (1516), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) which communicates with the first input port (21), and the fixed valve plate (51) and the movable valve plate (52) have the following cooperation relationship: the first flow guide hole (521) aligns with the sixth blind hole (1516) and then is closed by the sixth blind hole (1516); or, the first flow guide hole (521) partially aligns with the first through hole (511) and the sixth blind hole (1516) and then communicates with the first through hole (511); or, the first flow guide hole (521) aligns with the first through hole (511) and then communicates with the first through hole (511); or, the first flow guide hole (521) partially aligns with the sixth blind hole (1516) and the second through hole (512) and then communicates with the second through hole (512); or, the first flow guide hole (521) aligns with the second through hole (512) and then communicates with the second through hole (512); or, the first flow guide hole (521) aligns with the third through hole (513) and then communicates with the third through hole (513); or, the first flow guide hole (521) partially aligns with the third through hole (513) and the fifth blind hole (1515) and then communicates with the third through hole (513); the first flow guide hole (521) aligns with the fifth blind hole (1515) and then is closed by the fifth blind hole (1515); or, the first flow guide hole (521) partially aligns with the fifth blind hole (1515) and the fourth through hole (514) and then communicates with the fourth through hole (514); or, the first flow guide hole (521) aligns with the fourth through hole (514) and then communicates with the fourth through hole (514).

33. The fluid control valve usable for irrigation according to claim 32, wherein the fifth blind hole (1515) and the sixth blind hole (1516) are each formed bya blind hole structure directly formed on the fixed valve plate (51), or are each a combination of a through hole formed in the fixed valve plate (51) and a closed cavity (6) formed in the valve seat body (4).

34. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515) and a sixth blind hole (1516), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the sixth blind hole (1516) and then is closed by the sixth blind hole (1516), and the second flow guide hole (522) aligns with the fifth blind hole (1515) and then is closed by the fifth blind hole (1515); or, the first flow guide hole (521) partially aligns with the first through hole (511) and the sixth blind hole (1516) and then communicates with the first through hole (511), and the second flow guide hole (522) partially aligns with the third through hole (513) and the fifth blind hole (1515) and then communicates with the third through hole (513); or, the first flow guide hole (521) aligns with the first through hole (511) and then communicates with the first through hole (511), and the second flow guide hole (522) aligns with the third through hole (513) and then communicates with the third through hole (513); or, the first flow guide hole (521) partially aligns with the sixth blind hole (1516) and the second through hole (512) and then communicates with the second through hole (512), and the second flow guide hole (522) partially aligns with the fifth blind hole (1515) and the fourth through hole (514) and then communicates with the fourth through hole (514); or, the first flow guide hole (521) aligns with the second through hole (512) and then communicates with the second through hole (512), and the second flow guide hole (522) aligns with the fourth through hole (514) and then communicates with the fourth through hole (514).

35. The fluid control valve usable for irrigation according to claim 34, wherein the fifth blind hole (1515) and the sixth blind hole (1516) are each formed by a blind hole structure directly formed on the fixed valve plate (51), or are each a combination of a through hole formed in the fixed valve plate (51) and a closed cavity (6) formed in the valve seat body (4).

36. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515) and a sixth blind hole (1516), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the sixth blind hole (1516) and then is closed by the sixth blind hole (1516), and the second flow guide hole (522) aligns with the fifth blind hole (1515) and then is closed by the fifth blind hole (1515); or, the first flow guide hole (521) aligns with the second through hole (512) and then communicates with the second through hole (512), and the second flow guide hole (522) aligns with the first through hole (511) and then communicates with the first through hole (511); or, the first flow guide hole (521) aligns with the fourth through hole (514) and then communicates with the fourth through hole (514), and the second flow guide hole (522) aligns with the third through hole (513) and then communicates with the third through hole (513).

37. The fluid control valve usable for irrigation according to claim 36, wherein the fifth blind hole (1515) and the sixth blind hole (1516) are each formed by a blind hole structure directly formed on the fixed valve plate (51), or are each a combination of a through hole formed in the fixed valve plate (51) and a closed cavity (6) formed in the valve seat body (4).

38. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515), a sixth blind hole (1516), a seventh blind hole (1517) and an eighth blind hole (1518), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) which communicates with the first input port (21), and the fixed valve plate (51) and the movable valve plate (52) have the following cooperation relationship: the first flow guide hole (521) aligns with the eighth blind hole (1518) and then is closed by the eighth blind hole (1518); or, the first flow guide hole (521) partially aligns with the eighth blind hole (1518) and the first through hole (511) and then communicates with the first through hole (511); or, the first flow guide hole (521) aligns with the first through hole (511) and then communicates with the first through hole (511); or, the first flow guide hole (521) aligns with the fifth blind hole (1515) and then is closed by the fifth blind hole (1515); or, the first flow guide hole (521) partially aligns with the fifth blind hole (1515) and the second through hole (512) and then communicates with the second through hole (512); the first flow guide hole (521) aligns with the second through hole (512) and then communicates with the second through hole (512); or, the first flow guide hole (521) aligns with the sixth blind hole (1516) and then is closed by the sixth blind hole (1516); or, the first flow guide hole (521) partially aligns with the sixth blind hole (1516) and the third through hole (513) and then communicates with the third through hole (513); or, the first flow guide hole (521) aligns with the third through hole (513) and then communicates with the third through hole (513); or, the first flow guide hole (521) aligns with the seventh blind hole (1517) and then is closed by the seventh blind hole (1517); the first flow guide hole (521) partially aligns with the seventh blind hole (1517) and the fourth through hole (514) and then communicates with the fourth through hole (514); or the first flow guide hole (521) aligns with the fourth through hole (514) and then communicates with the fourth through hole (514).

39. The fluid control valve usable for irrigation according to claim 38, wherein the fifth blind hole (1515), the sixth blind hole (1516), the seventh blind hole (1517) and the eighth blind hole (1518) are each formed by a blind hole structure directly formed on the fixed valve plate (51), or are each a combination of a through hole formed in the fixed valve plate (51) and a closed cavity (6) formed in the valve seat body (4).

40. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515), a sixth blind hole (1516), a seventh blind hole (1517) and an eighth blind hole (1518), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the eighth blind hole (1518) and then is closed by the eighth blind hole (1518), and the second flow guide hole (522) aligns with the sixth blind hole (1516) and then is closed by the sixth blind hole (1516); or, the first flow guide hole (521) partially aligns with the eighth blind hole (1518) and the first through hole (511) and then communicates with the first through hole (511), and the second flow guide hole (522) partially aligns with the sixth blind hole (1516) and the third through hole (513) and then communicates with the third through hole (513); or, the first flow guide hole (521) aligns with the first through hole (511) and then communicates with the first through hole (511), and the second flow guide hole (522) aligns with the third through hole (513) and then communicates with the third through hole (513); or, the first flow guide hole (521) aligns with the fifth blind hole (1515) and then is closed by the fifth blind hole (1515), and the second flow guide hole (522) aligns with the seventh blind hole (1517) and then is closed by the seventh blind hole (1517); or, the first flow guide hole (521) partially aligns with the fifth blind hole (1515) and the second through hole (512) and then communicates with the second through hole (512), and the second flow guide hole (522) partially aligns with the seventh blind hole (1517) and the fourth through hole (514) and then communicates with the fourth through hole (514); or, the first flow guide hole (521) aligns with the second through hole (512) and then communicates with the second through hole (512), and the second flow guide hole (522) aligns with the fourth through hole (514) and then communicates with the fourth through hole (514).

41. The fluid control valve usable for irrigation according to claim 40, wherein the fifth blind hole (1515), the sixth blind hole (1516), the seventh blind hole (1517) and the eighth blind hole (1518) are each formed by a blind hole structure directly formed on the fixed valve plate (51), or are each a combination of a through hole formed in the fixed valve plate (51) and a closed cavity (6) formed in the valve seat body (4).

42. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515), a sixth blind hole (1516), a seventh blind hole (1517) and an eighth blind hole (1518), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521) and a second flow guide hole (522) which communicate with the first input port (21), and the fixed valve plate (51) and the movable valve plate (52) have the following cooperation relationship: the first flow guide hole (521) aligns with the eighth blind hole (1518) and then is closed by the eighth blind hole (1518), and the second flow guide hole (522) aligns with the fifth blind hole (1515) and then is closed by the fifth blind hole (1515); or, the first flow guide hole (521) partially aligns with the eighth blind hole (1518) and the first through hole (511) and then communicates with the first through hole (511), and the second flow guide hole (522) partially aligns with the fifth blind hole (1515) and the second through hole (512) and then communicates with the second through hole (512); or, the first flow guide hole (521) aligns with the first through hole (511) and then communicates with the first through hole (511), and the second flow guide hole (522) aligns with the second through hole (512) and then communicates with the second through hole (512); or, the first flow guide hole (521) aligns with the fifth blind hole (1515) and then is closed by the fifth blind hole (1515), and the second flow guide hole (522) aligns with the sixth blind hole (1516) and then is closed by the sixth blind hole (1516); or, the first flow guide hole (521) partially aligns with the fifth blind hole (1515) and the second through hole (512) and then communicates with the second through hole (512), and the second flow guide hole (522) partially aligns with the sixth blind hole (1516) and the third through hole (513) and then communicates with the third through hole (513); or, the first flow guide hole (521) aligns with the second through hole (512) and then communicates with the second through hole (512), and the second flow guide hole (522) aligns with the third through hole (513) and then communicates with the third through hole (513); or, the first flow guide hole (521) aligns with the sixth blind hole (1516) and then is closed by the sixth blind hole (1516), and the second flow guide hole (522) aligns with the seventh blind hole (1517) and then is closed by the seventh blind hole (1517); or, the first flow guide hole (521) partially aligns with the sixth blind hole (1516) and the third through hole (513) and then communicates with the third through hole (513), and the second flow guide hole (522) partially aligns with the seventh blind hole (1517) and the fourth through hole (514) and then communicates with the fourth through hole (514); or, the first flow guide hole (521) aligns with the third through hole (513) and then communicates with the third through hole (513), and the second flow guide hole (522) aligns with the fourth through hole (514) and then communicates with the fourth through hole (514); or, the first flow guide hole (521) aligns with the seventh blind hole (1517) and then is closed by the seventh blind hole (1517), and the second flow guide hole (522) aligns with the eighth blind hole (1518) and then is closed by the eighth blind hole (1518); or, the first flow guide hole (521) partially aligns with the seventh blind hole (1517) and the fourth through hole (514) and then communicates with the fourth through hole (514), and the second flow guide hole (522) partially aligns with the eighth blind hole (1518) and the first through hole (511) and then communicates with the first through hole (511); or, the first flow guide hole (521) aligns with the fourth through hole (514) and then communicates with the fourth through hole (514), and the second flow guide hole (522) aligns with the first through hole (511) and then communicates with the first through hole (511).

43. The fluid control valve usable for irrigation according to claim 42, wherein the fifth blind hole (1515), the sixth blind hole (1516), the seventh blind hole (1517) and the eighth blind hole (1518) are each formed by a blind hole structure directly formed on the fixed valve plate (51), or are each a combination of a through hole formed in the fixed valve plate (51) and a closed cavity (6) formed in the valve seat body (4).

44. The fluid control valve usable for irrigation according to claim 2 or 3, wherein the input port (2) comprises a first input port (21), the output ports (3) comprise a first output port (31), a second output port (32), a third output port (33) and a fourth output port (34), the fixed valve plate (51) is provided with a first through hole (511), a second through hole (512), a third through hole (513), a fourth through hole (514), a fifth blind hole (1515), a sixth blind hole (1516), a seventh blind hole (1517) and an eighth blind hole (1518), the first through hole (511), the second through hole (512), the third through hole (513) and the fourth through hole (514) respectively communicate with the first output port (31), the second output port (32), the third output port (33) and the fourth output port (34), the movable valve plate (52) is provided with a first flow guide hole (521), a second flow guide hole (522), a third flow guide hole (523) and a fourth flow guide hole (524) which communicate with the first input port (21), and the fixed valve plate (51) and the movable valve plate (52) have the following cooperation relationship: the first flow guide hole (521) aligns with the eighth blind hole (1518) and then is closed by the eighth blind hole (1518), the second flow guide hole (522) aligns with the fifth blind hole (1515) and then is closed by the fifth blind hole (1515), the third flow guide hole (523) aligns with the sixth blind hole (1516) and then is closed by the sixth blind hole (1516), and the fourth flow guide hole (524) aligns with the seventh blind hole (1517) and then is closed by the seventh blind hole (1517); or, the first flow guide hole (521) partially aligns with the eighth blind hole (1518) and the first through hole (511) and then communicates with the first through hole (511), the second flow guide hole (522) partially aligns with the fifth blind hole (1515) and the second through hole (512) and then communicates with the second through hole (512), the third flow guide hole (523) partially aligns with the sixth blind hole (1516) and the third through hole (513) and then communicates with the third through hole (513), and the fourth flow guide hole (524) partially aligns with the seventh blind hole (1517) and the fourth through hole (514) and then communicates with the fourth through hole (514); or, the first flow guide hole (521) aligns with the first through hole (511) and then communicates with the first through hole (511), the second flow guide hole (522) aligns with the second through hole (512) and then communicates with the second through hole (512), the third flow guide hole (523) aligns with the third through hole (513) and then communicates with the third through hole (513), and the fourth flow guide hole (524) aligns withs the fourth through hole (514) and then communicates with the fourth through hole (514).

45. The fluid control valve usable for irrigation according to claim 44, wherein the fifth blind hole (1515), the sixth blind hole (1516), the seventh blind hole (1517) and the eighth blind hole (1518) are each formed by a blind hole structure directly formed on the fixed valve plate (51), or are each a combination of a through hole formed in the fixed valve plate (51) and a closed cavity (6) formed in the valve seat body (4).
